# EUROPÄISCHE PATENTSCHRIFT

(11) **EP 3 658 397 B1**
(45) Veröffentlichungstag und Bekanntmachung des Hinweises auf die Patenterteilung: **12.05.2021**
(21) Anmeldenummer: 18738212.2
(22) Anmeldetag: 25.06.2018
(51) Int. Cl.: B60K 1/00, B60K 1/02, B60K 23/04

(54) **ELEKTRISCHE ACHSANTRIEBSVORRICHTUNG FÜR EIN KRAFTFAHRZEUG, SOWIE ZUGEHÖRIGES NUTZFAHRZEUG**
ELECTRIC AXLE DRIVE UNIT FOR A MOTOR VEHICLE, AND ASSOCIATED COMMERCIAL VEHICLE
ENSEMBLE D'ENTRAÎNEMENT ÉLECTRIQUE D'UN ESSIEU POUR UN VÉHICULE AUTOMOBILE, ET VÉHICULE UTILITAIRE ASSOCIÉ

(30) Priorität: 27.07.2017 DE 102017007081
(43) Veröffentlichungstag der Anmeldung: 03.06.2020
(73) Patentinhaber: Daimler AG, 70372 Stuttgart (DE)
(72) Erfinder: KRAJEWSKI, Christian, 73765 Neuhausen (DE); NIEBAUER, Guenter, 73269 Hochdorf (DE); VINCON, Florian, 70191 Stuttgart (DE)
(74) Vertreter: JENSEN & SON
(86) Internationale Anmeldenummer: PCT/EP2018/066878
(87) Internationale Veröffentlichungsnummer: WO 2019/020297

(56) Entgegenhaltungen:
- WO-A1-2017/089449
- WO-A1-2017/108168
- DE-A1-102015 101 042
- US-B1- 9 453 564

## Beschreibung

Die Erfindung betrifft eine elektrische Achsantriebsvorrichtung für ein Kraftfahrzeug gemäß dem Oberbegriff von Patentanspruch 1, eine elektrische Achsantriebsvorrichtung für ein Kraftfahrzeug gemäß dem Oberbegriff von Patentanspruch 13 sowie ein Kraftfahrzeug mit einer solchen elektrischen Achsantriebsvorrichtung.

Eine elektrische Achsantriebsvorrichtung für ein Kraftfahrzeug ist beispielsweise der DE 10 2009 033 531 A1, der US 9 453 564 B1 und der WO 2017/108168 A1 als bekannt zu entnehmen. Die elektrische Achsantriebsvorrichtung weist wenigstens ein um eine Raddrehachse drehbares Antriebsrad des Kraftfahrzeugs sowie wenigstens eine elektrische Maschine mit einem Stator und mit einem Rotor auf. Der Rotor ist dabei um eine Maschinendrehachse relativ zu dem Stator drehbar, wobei die Maschinendrehachse parallel zur Raddrehachse verläuft. Die elektrische Achsantriebsvorrichtung weist ferner ein von der ersten elektrischen Maschine antreibbares Getriebe auf, welches wenigstens eine erste Planetengetriebestufe und wenigstens eine von der ersten elektrischen Maschine antreibbare erste Stirnradgetriebestufe aufweist. Die Stirnradgetriebestufe weist wiederum ein erstes Stirnrad und ein mit dem ersten Stirnrad kämmendes zweites Stirnrad auf, welches beispielsweise über das erste Stirnrad und über die erste Planetengetriebestufe von der ersten elektrischen Maschine antreibbar ist. Dabei ist das Antriebsrad, dessen Raddrehachse parallel zur Maschinendrehachse verläuft, über das Getriebe von der ersten elektrischen Maschine antreibbar, sodass beispielsweise das Kraftfahrzeug insgesamt von der elektrischen Maschine elektrisch angetrieben werden kann.

Aus der US 2005 / 0 023 053 A1 ist eine elektrische Achsantriebsvorrichtung bekannt, bei welcher eine elektrische Maschine hinsichtlich einer durch eine Fahrzeughochrichtung und eine Fahrzeuglängsrichtung aufgespannten Längsmittelebene eines Kraftfahrzeugs zumindest teilweise auf einer ersten Seite der Längsmittelebene angeordnet ist; und eine Stirnradgetriebestufe auf einer der ersten Seite in Fahrzeugquerrichtung gegenüberliegenden zweiten Seite der Längsmittelebene (66) angeordnet ist. Ähnliches ist zumindest andeutungsweise aus den Schriften DE 10 2015 208 825 A1 und DE 10 2017 104 674 A1 (nachveröffentlicht) bekannt.

Aus der US 2009 / 0 098 969 A1 ist ferner ein Hybridantriebsstrang bekannt, bei welchem zwischen einer elektrischen Maschine und einem Achsgetriebe mehrere Planetengetriebestufen und zwei Stirnradgetriebestufen angeordnet sind.

Schließlich ist aus der gattungsgemäßen US 9 453 564 B1 eine elektrische Achsantriebsvorrichtung bekannt, bei welcher zusätzlich zu den oben genannten Merkmalen genau zwei planetengetriebestufen und genau zwei Stirnradgetriebestufen vorgesehen sind.

Aufgabe der vorliegenden Erfindung ist es, eine elektrische Achsantriebsvorrichtung und ein Kraftfahrzeug der eingangs genannten derart weiterzuentwickeln, dass ein besonders vorteilhafter Betrieb sowie gleichzeitig eine besonders kompakte Bauweise der elektrischen Achsantriebsvorrichtung realisierbar sind.

Diese Aufgabe wird durch eine elektrische Achsantriebsvorrichtung mit den Merkmalen des Patentanspruchs 1, durch eine elektrische Achsantriebsvorrichtung mit den Merkmalen des Patentanspruchs 13 sowie durch ein Nutzfahrzeug mit den Merkmalen des Patentanspruchs 12 gelöst. Vorteilhafte Ausgestaltungen mit zweckmäßigen Weiterbildungen der Erfindung sind in den übrigen Ansprüchen angegeben.

Um eine elektrische Achsantriebsvorrichtung der im Oberbegriff des Patentanspruchs 1 angegebenen Art derart darzustellen, ist es vorgesehen, dass die elektrische Achsantriebsvorrichtung ein über das Getriebe von der elektrischen Maschine antreibbares Achsgetriebe aufweist, über welches das Antriebsrad von der ersten elektrischen Maschine antreibbar ist. Hierdurch lässt sich ein besonders vorteilhafter Betrieb realisieren, da das wenigstens eine Antriebsrad besonders vorteilhaft, insbesondere mit einer besonders vorteilhaften Übersetzung, von der elektrischen Maschine angetrieben werden kann. Insbesondere ist es möglich, das wenigstens eine Antriebsrad und zumindest ein zweites Antriebsrad über das Achsgetriebe und das Getriebe von der elektrischen Maschine anzutreiben, wobei die vorigen und folgenden Ausführungen zu dem wenigstens einen Antriebsrads ohne weiteres auch auf das zumindest eine zweite Antriebsrad übertragen werden können und umgekehrt. Die Antriebsräder sind dabei beispielsweise einer Achse, insbesondere einer Hinterachse oder einer Vorderachse, zugeordnet, sodass die Achse beziehungsweise die Antriebsräder der Achse mittels der elektrischen Maschine besonders vorteilhaft angetrieben werden können, insbesondere über das Achsgetriebe und das Getriebe. Dabei ist das Achsgetriebe vorzugsweise als Differential beziehungsweise Differentialgetriebe, insbesondere als Kegelraddifferential, ausgebildet, sodass sich ein besonders vorteilhafter Betrieb realisieren lässt. Wie von Differentialgetrieben, insbesondere Kegelraddifferentialen, hinlänglich bekannt ist, lässt das Differentialgetriebe beispielsweise Drehzahlunterschiede beziehungsweise einen Drehzahlausgleich zwischen den Antriebsrädern zu, insbesondere bei einer Kurvenfahrt, sodass sich das kurvenäußere Antriebsrad mit einer höheren Drehzahl als das kurveninnere Antriebsrad drehen kann, ohne dass es zu einer übermäßigen Verspannung der Achsantriebsvorrichtung kommt. Hierdurch lässt sich ein besonders vorteilhafter Betrieb realisieren.

Um dabei gleichzeitig eine besonders kompakte Bauweise der elektrischen Achsantriebsvorrichtung realisieren und somit den Bauraumbedarf der elektrischen Achsantriebsvorrichtung besonders gering halten zu können, ist die erste elektrische Maschine - insbesondere bezogen auf eine Einbaulage der elektrischen Achsantriebsvorrichtung - hinsichtlich einer durch die Fahrzeughochrichtung und die Fahrzeuglängsrichtung aufgespannten Längsmittelebene des Kraftfahrzeugs zumindest teilweise auf einer ersten Seite der Längsmittelebene angeordnet, wobei die erste Stirnradgetriebestufe auf einer der ersten Seite in Fahrzeugquerrichtung gegenüberliegenden zweiten Seite der Längsmittelebene angeordnet ist. Die elektrische Achsantriebsvorrichtung nimmt dabei ihre Einbaulage in vollständig hergestelltem Zustand des Kraftfahrzeugs ein, wobei die elektrische Achsantriebsvorrichtung in vollständig hergestelltem Zustand des Kraftfahrzeugs an dem Kraftfahrzeug, insbesondere zumindest mittelbar an einem Aufbau oder an einem Rahmen des Kraftfahrzeugs, gehalten ist. In vollständig hergestelltem Zustand des Kraftfahrzeugs steht dieses beispielsweise auf einer horizontalen Ebene, sodass die Längsmittelebene eine vertikale Längsmittelebene ist, welche in dem vollständig hergestellten Zustand des Kraftfahrzeugs zumindest im Wesentlichen senkrecht zur Fahrzeugquerrichtung, zur Horizontalen beziehungsweise zur horizontalen Ebene verläuft.

Somit wird die Längsmittelebene auch als vertikale Längsmittelebene oder als vertikale Fahrzeug-Längsmittelebene bezeichnet. Insbesondere kann unter der Längsmittelebene Folgendes verstanden werden: Das Kraftfahrzeug, insbesondere die elektrische Achsantriebsvorrichtung, weist in seinem beziehungsweise ihrem vollständig hergestellten Zustand eine - insbesondere bezogen auf die Einbaulage - in Fahrzeugquerrichtung verlaufende Breite auf, wobei beispielsweise die Mitte dieser Breite in der Längsmittelebene liegt. Ausgehend von der Mitte beziehungsweise ausgehend von der Längsmittelebene erstreckt sich das Kraftfahrzeug beziehungsweise die elektrische Achsantriebsvorrichtung in Fahrzeugquerrichtung um eine erste Strecke nach links außen hin und in Fahrzeugquerrichtung um eine zweite Strecke nach rechts außen hin, wobei die erste Strecke der zweiten Strecke entspricht beziehungsweise umgekehrt, das heißt wobei die Strecken gleich sind. Dabei ist das Kraftfahrzeug beziehungsweise die elektrische Achsantriebsvorrichtung bezogen auf die Längsmittelebene nicht notwendigerweise symmetrisch ausgebildet, sodass die Längsmittelebene nicht notwendigerweise eine Symmetrieebene des Kraftfahrzeugs beziehungsweise der elektrischen Achsantriebsvorrichtung ist.

Dabei weist das Getriebe eine zweite Planetengetriebestufe auf, wodurch auf bauraum- und gewichtsgünstige Weise eine besonders vorteilhafte Übersetzung des Getriebes insgesamt geschaffen werden kann. Dadurch kann das wenigstens eine Antriebsrad beziehungsweise können die Antriebsräder besonders vorteilhaft angetrieben werden, sodass ein besonders vorteilhafter Betrieb realisierbar ist.

Insgesamt weist das Getriebe genau zwei Planetengetriebestufen und genau zwei Stirnradgetriebestufen auf.

Erfindungsgemäß ist vorgesehen, dass bezogen auf einen Drehmomentenfluss von der elektrischen Maschine zu dem wenigstens einen Antriebsrad die erste Planetengetriebestufe nach der elektrischen Maschine und vor dem Antriebsrad, die erste Stirnradgetriebestufe nach der ersten Planetengetriebestufe und vor dem Antriebsrad, die zweite Planetengetriebestufe nach der ersten Stirnradgetriebestufe und vor dem wenigstens einen Antriebsrad und die zweite Stirnradgetriebestufe nach der zweiten Planetengetriebestufe und vor dem wenigstens einen Antriebsrad angeordnet ist. Es wurde gefunden, dass sich durch diese Anordnung der Planetengetriebestufen und der Stirnradgetriebestufen eine besonders vorteilhafte Gesamtübersetzung des Getriebes beziehungsweise der Achsantriebsvorrichtung insgesamt realisieren lässt, sodass das wenigstens eine Antriebsrad besonders vorteilhaft angetrieben werden kann bei gleichzeitiger Realisierbarkeit einer kompakten Bauweise, das heißt geringer äußerer Abmessungen der Achsantriebsvorrichtung.

Weiterhin erfindungsgemäß hat es sich als besonders vorteilhaft gezeigt, wenn wenigstens ein Bremselement vorgesehen ist, mittels welchem ein Getriebeelement der zweiten Planetengetriebestufe an einem Gehäuse des Getriebes festlegbar ist. Die jeweilige Planetengetriebestufe weist beispielsweise ein Sonnenrad als erstes Getriebeelement, ein Hohlrad als zweites Getriebeelement und wenigstens einen Planetenradträger als drittes Getriebeelement auf. Ferner weist die jeweilige Planetengetriebestufe wenigstens ein Planetenrad auf, welches beispielsweise mit dem jeweiligen Sonnenrad und mit dem jeweiligen Hohlrad kämmt und drehbar an dem Planetenträger gehalten ist. Mittels des wenigstens einen Bremselements ist somit zumindest eines der Getriebeelemente der zweiten Planetengetriebestufe an dem Gehäuse des Getriebes festlegbar, wobei die Getriebeelemente der zweiten Planetengetriebestufe in dem genannten Gehäuse aufgenommen sein können. Das Bremselement ist beispielsweise zwischen wenigstens einem Bremszustand beziehungsweise zwischen wenigstens einer Bremsstellung und wenigstens einem Freigabezustand beziehungsweise einer Freigabestellung umschaltbar, insbesondere bewegbar. Die jeweiligen Getriebeelemente der jeweiligen Planetengetriebestufe, insbesondere der zweiten Planetengetriebestufe, sind beispielsweise um eine gemeinsame Hauptdrehachse relativ zu dem Gehäuse drehbar, insbesondere dann, wenn sich das Bremselement in dem Freigabezustand beziehungsweise in der Freigabestellung befindet und wenn beispielsweise die zweite Planetengetriebestufe angetrieben wird.

Mit anderen Worten lässt das Bremselement in seinem Freigabezustand beziehungsweise in seiner Freigabestellung eine Drehung des einen Getriebeelements der zweiten Planetengetriebestufe um die Hauptdrehachse relativ zu dem Gehäuse zu, sodass zumindest das eine Getriebeelement der zweiten Planetengetriebestufe um die Hauptdrehachse relativ zu dem Gehäuse gedreht wird, wenn die zweite Planetengetriebestufe angetrieben wird. Befindet sich jedoch das Bremselement in seiner Bremsstellung beziehungsweise in seinem Bremszustand, so ist das eine Getriebeelement der zweiten Planetengetriebestufe mittels des Bremselements, insbesondere drehfest, an dem Gehäuse festgelegt, sodass sich das eine Getriebeelement der zweiten Planetengetriebestufe insbesondere auch dann nicht um die Hauptdrehachse relativ zu dem Gehäuse dreht, wenn die zweite Planetengetriebestufe angetrieben wird, das heißt wenn Drehmomente in die zweite Planetengetriebestufe eingeleitet werden. Das Bremselement ermöglicht es somit, das eine Getriebeelement der zweiten Planetengetriebestufe bedarfsgerecht an dem Gehäuse, insbesondere drehfest, festzulegen und freizugeben, sodass eine Schaltbarkeit der zweiten Planetengetriebestufe realisiert beziehungsweise realisierbar ist. Hierdurch ist die zweite Planetengetriebestufe als schaltbarer Planetensatz ausgebildet, sodass beispielsweise wenigstens zwei voneinander unterschiedliche Übersetzungen darstellbar sind, über welche das wenigstens eine Antriebsrad von der elektrischen Maschine antreibbar ist. Die Übersetzungen sind dabei dadurch schaltbar, dass das Bremselement zwischen dem Freigabezustand und dem Bremszustand umschaltbar beziehungsweise bewegbar ist. Ferner kann alternativ oder zusätzlich eine Neutralstellung beziehungsweise ein Neutralzustand als Leerlauf dargestellt werden.

Um das Bremselement besonders gewichts- und bauraumgünstig zu realisieren, ist weiterhin erfindungsgemäß vorgesehen, dass das Bremselement das Hohlrad der zweiten Planetengetriebestufe aufweist beziehungsweise als das Hohlrad der zweiten Planetengetriebestufe ausgebildet ist, wobei das Hohlrad der zweiten Planetengetriebestufe in axialer Richtung der zweiten Planetengetriebestufe relativ zu dem Gehäuse verschiebbar ist, um dadurch das Bremselement zwischen der Freigabestellung und der Bremsstellung zu verschieben. Die axiale Richtung der zweiten Planetengetriebestufe fällt dabei beispielsweise mit der Hauptdrehachse der zweiten Planetengetriebestufe zusammen. Bei dieser Ausführungsform kommt dem Hohlrad eine Doppelfunktion zu, da es einerseits zur Realisierung wenigstens einer vorteilhaften Übersetzung und andererseits als das beschriebene Bremselement genutzt wird.

Durch die Gesamtheit der Erfindung wird sichergestellt, dass sowohl eine hoch leistungsfähige elektrische Achsantriebsvorrichtung dargestellt wird als auch eine elektrische Achsantriebsvorrichtung, die ausgehend von einer klassischen nichtelektrifizierten Achsantriebsvorrichtung trotz extremer baulicher Einschränkungen zu einer sehr kompakten Baueinheit führt.

Bei einer besonders vorteilhaften Ausführungsform der Erfindung ist wenigstens ein Verblockungselement vorgesehen, mittels welchem wenigstens zwei der Getriebeelemente der zweiten Planetengetriebestufe miteinander verblockbar sind. Das Verblockungselement ist beispielsweise zwischen wenigstens einem Verblockungszustand beziehungsweise wenigstens einer Verblockungsstellung und wenigstens einem Lösezustand beziehungsweise wenigstens einer Lösestellung umschaltbar, insbesondere bewegbar. In dem Verblockungszustand beziehungsweise in der Verblockungsstellung sind mittels des Verblockungselements die zwei Getriebeelemente der zweiten Planetengetriebestufe miteinander verblockt, das heißt drehfest miteinander verbunden, sodass die zweite Getriebeelemente der zweiten Planetengetriebestufe als Block, das heißt gemeinsam um die Hauptdrehachse umlaufen, insbesondere wenn die zweite Planetengetriebestufe angetrieben wird. Mit anderen Worten drehen sich in dem Verblockungszustand des Verblockungselements die zwei Getriebeelemente gemeinsam um die Hauptdrehachse relativ zu dem Gehäuse, wenn die zweite Planetengetriebestufe angetrieben wird. In dem Lösezustand beziehungsweise in der Lösestellung jedoch gibt das Verblockungselement die zweite Getriebeelemente der zweiten Planetengetriebestufe, insbesondere für eine Relativdrehung zueinander um die Hauptdrehachse, frei, sodass sich die zweite Getriebeelemente insbesondere dann, wenn die zweite Planetengetriebestufe angetrieben wird, um die Hauptdrehachse relativ zueinander und relativ zu dem Gehäuse drehen können. Hierdurch können beispielsweise auf besonders bauraum- und gewichtsgünstige Weise die zuvor genannten, voneinander unterschiedlichen Übersetzungen dargestellt werden, da die zweite Planetengetriebestufe durch Einsatz des Verblockungselements als schaltbare Planetengetriebestufe beziehungsweise als schaltbarer Planetensatz ausgebildet ist beziehungsweise ausgebildet werden kann.

Um eine besonders kompakte Bauweise darstellen zu können, ist es in weiterer Ausgestaltung der Erfindung vorgesehen, dass die zweite Planetengetriebestufe zumindest teilweise, insbesondere zumindest überwiegend oder vollständig, auf der zweiten Seite der Längsmittelebene angeordnet ist.

Bei einer besonders vorteilhaften Ausführungsform der Erfindung ist die zweite Stirnradgetriebestufe zumindest im Wesentlich in beziehungsweise auf der Längsmittelebene angeordnet. Hierunter ist insbesondere zu verstehen, dass sich die Längsmittelebene durch jeweilige, miteinander kämmende Stirnräder der zweiten Stirnradgetriebestufe erstreckt sodass beispielsweise die Stirnräder der zweiten Stirnradgetriebestufe bezogen auf die Fahrzeugquerrichtung zumindest im Wesentlichen in der Mitte der Achsantriebsvorrichtung beziehungsweise der genannten Achse angeordnet sind.

Um den Bauraumbedarf der elektrischen Achsantriebsvorrichtung besonders gering halten zu können, ist es bei einer weiteren Ausführungsform der Erfindung vorgesehen, dass die elektrische Maschine zumindest zu zwei Dritteln ihres, insbesondere äußeren, Volumens beziehungsweise ihrer äußeren Abmessungen auf der ersten Seite der Längsmittelebene angeordnet ist.

Eine weitere Ausführungsform zeichnet sich dadurch aus, dass eine zweite elektrische Maschine und ein weiteres, von der zweiten elektrischen Maschine antreibbares und mit dem zweiten Stirnrad kämmendes Stirnrad vorgesehen sind. Die zweite elektrische Maschine kann somit Drehmomente als Antriebsmomente bereitstellen, die beispielsweise über das weitere Stirnrad auf das zweite Stirnrad der ersten Stirnradgetriebestufe übertragen werden und somit in das Getriebe eingeleitet werden können. Somit ist die zweite elektrische Maschine über das weitere Stirnrad mit dem zweiten Stirnrad der ersten Stirnradgetriebestufe gekoppelt, wobei die jeweilige Stirnradgetriebestufe auch als Stirnradstufe bezeichnet wird. Die jeweilige Planetengetriebestufe wird auch als Planetenstufen, Planetensatz oder Planetenradsatz bezeichnet.

Dabei ist das wenigstens eine Antriebsrad mittels der zwei elektrischen Maschinen antreibbar, da die jeweilige elektrische Maschine wenigstens ein jeweiliges Drehmoment als Antriebsmoment zum Antreiben des wenigstens einen Antriebsrads bereitstellen kann. Die erste elektrische Maschine kann beispielsweise ihr Antriebsmoment über das erste Stirnrad der ersten Stirnradgetriebestufe bereitstellen, wobei die zweite elektrische Maschine ihr Antriebsmoment über das weitere Stirnrad bereitstellen kann. Die jeweiligen, von den jeweiligen elektrischen Maschinen bereitgestellten Antriebsmomente werden auf das zweite Stirnrad der ersten Stirnradgetriebestufe übertragen und auf das zweite Stirnrad vereinigt, sodass sich ein besonders vorteilhafter und kompakter Antrieb darstellen lässt.

Um den Bauraumbedarf besonders gering halten zu können, ist es in weiterer Ausgestaltung der Erfindung vorgesehen, dass die zweite elektrische Maschine entlang einer senkrecht zur Fahrzeugquerrichtung und somit beispielsweise zumindest im Wesentlichen parallel zur Längsmittelebene verlaufende Richtung mit der ersten elektrischen Maschine fluchtet. Die zweite elektrische Maschine weist beispielsweise einen zweiten Stator und einen zweiten Rotor auf, welcher um eine zweite Maschinendrehachse relativ zu dem zweiten Stator drehbar ist. Dabei ist es vorzugsweise vorgesehen, dass die zweite Maschinendrehachse desachsiert von der ersten Maschinendrehachse ist, wobei vorzugsweise die jeweilige Maschinendrehachse desachsiert zur Raddrehachse ist. Ferner ist es vorzugsweise vorgesehen, dass die Maschinendrehachsen in einer gemeinsamen Ebene liegen, welche beispielsweise parallel zur Fahrzeughochrichtung beziehungsweise parallel zur Längsmittelebene verläuft beziehungsweise mit der Längsmittelebene zusammenfällt. Die Raddrehachsen und die jeweilige Maschinendrehachse verlaufen vorzugsweise zumindest im Wesentlichen in Fahrzeugquerrichtung.

Eine weitere Ausführungsform zeichnet sich dadurch aus, dass die erste Planetengetriebestufe, die erste elektrische Maschine und die erste Stirnradgetriebestufe in einem gemeinsamen Gehäuse, insbesondere in dem zuvor genannten Gehäuse, angeordnet sind, wobei das Gehäuse zu jeweils gleichen Teilen auf der ersten Seite und auf der zweiten Seite der Längsmittelebene angeordnet ist. Hierdurch lässt sich eine kompakte Bauweise darstellen. Ferner bilden beispielsweise die erste Planetengetriebestufe, die erste elektrische Maschine und die erste Stirnradgetriebestufe sowie das diesen gemeinsame Gehäuse ein Modul, welches einfach und kostengünstig gehandhabt und montiert werden kann.

Um einen besonders vorteilhaften Betrieb zu realisieren, hat es sich schließlich als besonders vorteilhaft gezeigt, wenn ein Ölkühler und/oder eine Leistungselektronik auf einer dem Achsgetriebe abgewandten Seite der ersten elektrischen Maschine oder auf einer der ersten elektrischen Maschine abgewandten Seite des Achsgetriebes angeordnet sind beziehungsweise ist.

Um den Bauraumbedarf besonders gering halten zu können, ist die zweite elektrische Maschine hinsichtlich einer durch die Fahrzeugquerrichtung und die Fahrzeuglängsrichtung aufgespannten weiteren Ebene des Kraftfahrzeugs auf einer dritten Seite der weiteren Ebene angeordnet, wobei die erste elektrische Maschine auf einer dritten Seite in Fahrzeughochrichtung gegenüberliegenden vierten Seite der weiteren Ebene angeordnet ist. Beispielsweise sind die elektrische Maschine in Fahrzeughochrichtung übereinander angeordnet, wobei beispielsweise eine der elektrischen Maschinen in Fahrzeughochrichtung nach oben hin zumindest teilweise, insbesondere zumindest überwiegend oder vollständig, durch die andere elektrische Maschine überdeckt ist beziehungsweise sodass beispielsweise die andere elektrische Maschine in Fahrzeughochrichtung nach unten hin zumindest teilweise, insbesondere zumindest überwiegend oder vollständig, durch eine elektrische Maschine überdeckt ist.

Zur Erfindung gehört auch ein Kraftfahrzeug, insbesondere ein Nutzfahrzeug, mit wenigstens einer erfindungsgemäßen elektrischen Achsantriebsvorrichtung. Vorteile und vorteilhafte Ausgestaltungen der erfindungsgemäßen Achsantriebsvorrichtung sind als Vorteile und vorteilhafte Ausgestaltungen des erfindungsgemäßen Kraftfahrzeugs anzusehen und umgekehrt.

Dabei hat es sich als besonders vorteilhaft gezeigt, wenn das Kraftfahrzeug wenigstens zwei Längsträger aufweist, welche beispielsweise in Fahrzeugquerrichtung voneinander beabstandet sind und sich zumindest im Wesentlichen in Fahrzeuglängsrichtung erstrecken. Dabei sind alle Komponenten der Achsantriebsvorrichtung in Fahrzeugquerrichtung zwischen den Längsträgern angeordnet. Die Längsträger sind beispielsweise Bestandteil eines Rahmens des beispielsweise als Nutzfahrzeug ausgebildeten Kraftfahrzeugs, wobei der Rahmen beispielsweise auch wenigstens einen Querträger umfasst, durch welchen die Längsträger beispielsweise miteinander verbunden sind.

Der Erfindung liegt dabei insbesondere folgende Erkenntnis zugrunde: Die Platzierung eines elektrischen Antriebs, das heißt einer elektrischen Achsantriebsvorrichtung an einer beispielsweise als Vorder- oder Hinterachse ausgebildeten Achse eines Kraftfahrzeugs in einem bestehenden Bauraum kann herausfordernd sein, da üblicherweise ein nur sehr geringer Bauraum zur Verfügung steht. Erfindungsgemäß lässt sich jedoch nun eine besonders kompakte Bauweise realisieren, sodass die als elektrischer Antrieb fungierende elektrische Achsantriebsvorrichtung inklusive einer besonders vorteilhaften, insbesondere durch das Getriebe sowie durch das Achsgetriebe dargestellten Übersetzung beispielsweise besonders vorteilhaft in einem bestehenden, auch als Leiterrahmen bezeichneten Rahmen und dabei insbesondere zwischen die Längsträger und zwischen etwaig vorgesehene Federbälge integriert werden kann. Üblicherweise ist eine solche Integration insofern ein Problem, als aus fahrdynamischen Gründen eine große Übersetzung beziehungsweise Untersetzung mit einem Wert von bis zu 70 wünschenswert ist. Die Untersetzung beziehungsweise Übersetzung wird üblicherweise mit i bezeichnet, wobei vorzugsweise gelten soll, dass i bis zu 70 beträgt. Üblicherweise ist zur Realisierung einer solch hohen Übersetzung beziehungsweise Untersetzung ein entsprechend großer Bauraum erforderlich. Erfindungsgemäß lässt sich nun eine solch kompakte Bauweise der elektrischen Achsantriebsvorrichtung realisieren, dass beispielsweise bereits bestehende Achsbrücken, insbesondere Hinterachsbrücken, ohne oder mit nur sehr geringen Änderungen übernommen und somit beibehalten werden können.

Insbesondere durch Einsatz des Bremselements und des Verblockungselements können wenigstens zwei schaltbare Übersetzungen sowie eine Neutralstellung des Getriebes beziehungsweise der Achsantriebsvorrichtung insgesamt dargestellt werden, und das auf besonders bauraumgünstige Weise. Über die zweite Stirnradgetriebestufe, wobei die jeweilige Stirnradgetriebestufe auch als Stirnradgruppe bezeichnet wird, kann das jeweilige Antriebsmoment auf das vorzugsweise als Differential ausgebildete Achsgetriebe übertragen werden. Ferner ist es möglich, die elektrischen Maschinen zusammen mit dem Getriebe in Fahrzeuglängsrichtung beziehungsweise in Vorwärtsfahrtrichtung vor oder hinter dem wenigstens einen Antriebsrad beziehungsweise der Achse zu positionieren, sodass eine bedarfsgerechte Positionierung der jeweiligen elektrischen Maschine und des Getriebes darstellbar ist.

Um das wenigstens eine Antriebsrad anzutreiben, wird die jeweilige elektrische Maschine beispielsweise in einem Motorbetrieb und somit als Elektromotor betrieben. Hierzu wird beispielsweise die elektrische Maschine mit elektrischer Energie beziehungsweise elektrischem Strom versorgt, die beziehungsweise der in einem Energiespeicher gespeichert ist. Der Energiespeicher ist beispielsweise als Batterie, insbesondere als Hochvolt-Batterie (HV-Batterie), ausgebildet. Bei der erfindungsgemäßen Achsantriebsvorrichtung lässt sich eine kompakte Schachtelung des Getriebes realisieren, sodass die erste elektrische Maschine beziehungsweise die beiden elektrischen Maschinen sowie das Getriebe zwischen den Längsträgern und etwaig vorgesehenen Federbalgen positioniert werden können. Hierdurch kann beispielsweise zusätzlicher Bauraum geschaffen werden, in welchem der zuvor genannte Energiespeicher beziehungsweise mehrerer solcher Energiespeicher angeordnet werden können. In der Folge kann das Kraftfahrzeug eine besonders hohe Menge an elektrischer Energie zum Antreiben der jeweiligen elektrischen Maschine mitführen, sodass eine besonders hohe elektrische Reichweite darstellbar ist, über welche das Kraftfahrzeug elektrische angetrieben werden kann. Außerdem können beispielsweise bereits bestehende Achskomponenten und der Rahmen als Chassis beibehalten und weiterverwendet werden, und dies ohne oder mit nur geringen Änderungen.

Durch die beschriebene Möglichkeit, zwei schaltbare Übersetzungen darzustellen, kann ein besonders vorteilhafter Antrieb des wenigstens einen Antriebsrads dargestellt werden. Außerdem ist die beschriebene Leerlaufstellung möglich, sodass beispielsweise auch dann, wenn die jeweilige elektrische Maschine das Getriebe antreibt, ein Antreiben des wenigstens einen Antriebsrads unterbleibt. Durch die unterschiedlichen möglichen Positionierungen der jeweiligen elektrischen Maschine des Getriebes, insbesondere vor und hinter der Achse, kann Platz für weitere Komponenten wie beispielsweise Energiespeicher geschaffen werden.

Ferner hat es sich als vorteilhaft gezeigt, wenn das Bremselement das Sonnenrad der zweiten Planetengetriebestufe aufweist beziehungsweise als das Sonnenrad der zweiten

Planetengetriebestufe ausgebildet ist, wobei das als das Bremselement ausgebildete Sonnenrad der Planetengetriebestufe dann als Verschiebesonne ausgebildet ist. Die Verschiebesonne ist dabei in axialer Richtung der zweiten Planetengetriebestufe relativ zu dem Gehäuse verschiebbar und dadurch zwischen dem Bremszustand beziehungsweise der Bremsstellung und dem Freigabezustand beziehungsweise der Freigabestellung bewegbar beziehungsweise verschiebbar, insbesondere relativ zu dem Gehäuse. Wird beispielsweise - wie zuvor alternativ beschrieben - das Hohlrad der zweiten Planetengetriebestufe als das Bremselement verwendet, so ist dann das Hohlrad als Verschiebehohlrad ausgebildet, da das Hohlrad in axialer Richtung der zweiten Planetengetriebestufe relativ zu dem Gehäuse zwischen der Bremsstellung und der Freigabestellung bewegt beziehungsweise verschoben werden kann.

Als besonders vorteilhaft hat es sich ferner gezeigt, wenn die erste Planetengetriebestufe über das Sonnenrad der ersten Planetengetriebestufe von der ersten elektrischen Maschine antreibbar, insbesondere an die erste elektrische Maschine angebunden, ist. Hierunter ist insbesondere zu verstehen, dass das Sonnenrad der ersten Planetengetriebestufe drehfest mit der ersten elektrischen Maschine, insbesondere mit dem Rotor der ersten elektrischen Maschine, verbunden oder verbindbar ist, wobei insbesondere das Sonnenrad der Planetengetriebestufe vorzugsweise koaxial zu dem Rotor der ersten elektrischen Maschine angeordnet ist.

Ferner hat es sich als besonders vorteilhaft gezeigt, wenn die erste Planetengetriebestufe über den Planetenträger der ersten Planetengetriebestufe an die erste Stirnradgetriebestufe, insbesondere an das erste Stirnrad der ersten Stirnradgetriebestufe, angebunden ist. Hierzu ist beispielsweise der Planetenträger der ersten Planetengetriebestufe drehfest mit dem ersten Stirnrad der ersten Stirnradgetriebestufe verbindbar oder verbunden, wobei vorzugsweise der Planetenträger der ersten Planetengetriebestufe koaxial zu dem ersten Stirnrad der ersten Stirnradgetriebestufe angeordnet ist.

Die zweite Stirnradgetriebestufe umfasst beispielsweise ein drittes Stirnrad und ein mit dem dritten Stirnrad kämmendes viertes Stirnrad, wobei beispielsweise das wenigstens eine Antriebsrad über das vierte Stirnrad von dem dritten Stirnrad antreibbar ist. Somit ist beispielsweise bezogen auf den zuvor genannten Drehmomentenfluss das dritte Stirnrad nach der zweiten Planetengetriebestufe und vor dem wenigstens einen Antriebsrad angeordnet, wobei das vierte Stirnrad nach dem dritten Stirnrad und vor dem wenigstens einen Antriebsrad angeordnet ist.

Dabei hat es sich als vorteilhaft gezeigt, wenn die zweite Planetengetriebestufe über den Planetenträger der zweiten Planetengetriebestufe an die zweite Stirnradgetriebestufe, insbesondere an das dritte Stirnrad, angebunden ist. Hierzu ist beispielsweise der Planetenträger der zweiten Planetengetriebestufe drehfest mit dem dritten Stirnrad verbunden oder verbindbar, wobei vorzugsweise vorgesehen ist, dass das dritte Stirnrad koaxial zu dem Planetenträger der zweiten Planetengetriebestufe angeordnet ist.

Eine weitere Ausführungsform zeichnet sich dadurch aus, dass die zweite Planetengetriebestufe über das Sonnenrad der zweiten Planetengetriebestufe an die erste Stirnradgetriebestufe angebunden ist. Hierzu beispielsweise das Sonnenrad der zweiten Planetengetriebestufe drehfest mit dem zweiten Stirnrad der ersten Stirnradgetriebestufe verbunden oder verbindbar, wobei vorzugsweise vorgesehen ist, dass das Sonnenrad der zweiten Planetengetriebestufe koaxial zum zweiten Stirnrad der ersten Stirnradgetriebestufe angeordnet ist.

Alternativ hat es sich als besonders vorteilhaft gezeigt, wenn die zweite Planetengetriebestufe über das Hohlrad der zweiten Planetengetriebestufe an die erste Stirnradgetriebestufe, insbesondere an das zweite Stirnrad der ersten Stirnradgetriebestufe, angebunden ist. Hierzu weist beispielsweise das Hohlrad der zweiten Planetengetriebestufe eine Verzahnung, insbesondere eine Außenverzahnung, auf, durch welche das zweite Stirnrad der ersten Stirnradgetriebestufe gebildet ist. Dabei sind beispielsweise das Hohlrad der zweiten Planetengetriebestufe und die Stirnräder der ersten Stirnradgetriebestufe in einer gemeinsamen Ebene und dabei beispielsweise in radialer Richtung der ersten Stirnradgetriebestufe nebeneinander beziehungsweise aufeinanderfolgend angeordnet.

Die vorigen und folgenden Ausführungen zur Schaltbarkeit der zweiten Planetengetriebestufe können ohne weiteres auch auf die erste Planetengetriebestufe übertragen werden und umgekehrt, sodass alternativ oder zusätzlich zur Schaltbarkeit der zweiten Planetengetriebestufe vorgesehen sein kann, dass die erste Planetengetriebestufe schaltbar ist. Somit ist beispielsweise wenigstens ein zweites Bremselement vorgesehen, mittels welchem eines der Getriebeelemente der ersten Planetengetriebestufe an einem Gehäuse des Getriebes, insbesondere drehfest, festlegbar ist, sodass beispielsweise die vorigen und folgenden Ausführungen zumindest des einen Bremselement auch auf das zweite Bremselement, dann bezogen auf die erste Getriebestufe, übertragen werden können und umgekehrt.

Ist beispielsweise wenigstens ein zweites Verblockungselement vorgesehen, mittels welchem wenigstens zwei Getriebeelemente der ersten Planetengetriebestufe miteinander verblockbar sind, sodass beispielsweise die vorigen und folgenden Ausführungen zu wenigstens einem Verblockungselement auf das zweite Verblockungselement, dann bezogen auf die erste Planetengetriebestufe, übertragen werden können und umgekehrt.

Eine weitere Ausführungsform zeichnet sich dadurch aus, dass dem Achsgetriebe eine Differentialsperre zugeordnet ist, deren Funktion bezüglich Differentialgetrieben hinlänglich und insbesondere aus dem allgemeinen Stand der Technik bekannt ist. Durch den Einsatz der Differentialsperre kann das Achsgetriebe zu einem Sperrdifferential weitergebildet werden. Mittels der Differentialsperre kann beispielsweise der zuvor genannte Drehzahlausgleich eingeschränkt beziehungsweise unterbunden werden, sodass die Antriebsräder über die Differentialsperre miteinander koppelbar sind.

Dabei hat es sich als besonders vorteilhaft gezeigt, wenn die Differentialsperre zumindest teilweise, insbesondere zumindest überwiegend oder vollständig, auf der ersten Seite der Längsmittelebene angeordnet ist, da dort ausreichend Platz für einen zugehörigen Aktor zur Verfügung steht. Mittels des Aktors kann beispielsweise wenigstens ein Sperrelement der insbesondere als elektronische Differentialsperre ausgebildeten Differentialsperre betätigt beziehungsweise bewegt werden.

Die elektrischen Maschinen bilden beispielsweise einen Zwickel, welcher auch als Spandrille bezeichnet wird und beispielsweise aus dem Bereich der Architektur hinlänglich bekannt ist. Dabei ist es zur Realisierung einer besonders kompakten Bauweise vorzugsweise vorgesehen, dass das dritte Stirnrad der zweiten Stirnradgetriebestufe in dem durch die elektrische Maschinen gebildeten Zwickel zumindest teilweise angeordnet ist, sodass beispielsweise zumindest ein Teilbereich des dritten Stirnrads in radialer Richtung des dritten Stirnrads nach außen hin auf einer fünften Seite durch die erste elektrische Maschine und auf einer in radialer Richtung des dritten Stirnrads der fünften Seite gegenüberliegenden sechsten Seite durch die zweite elektrische Maschine überdeckt ist.

Die Realisierbarkeit der zuvor beschriebenen Neutralstellung beziehungsweise des Leerlaufs, insbesondere durch Schalten beziehungsweise wegen des Bremselements in den Freigabezustand, können, wie beschrieben, die elektrischen Maschinen weiterlaufen und beispielsweise über ihre jeweiligen Rotoren, zumindest geringe, Drehmomente bereitstellen, ohne dass das wenigstens eine Antriebsrad beziehungsweise die Antriebsräder von den elektrischen Maschinen angetrieben wird beziehungsweise werden. Hierdurch ist es möglich, eine Kühlung der elektrischen Maschinen, während diese weiterlaufen, aufrechtzuerhalten, ohne dass jedoch das Antriebsrad angetrieben wird. Beispielsweise ist die erste Planetengetriebestufe in axialer Richtung der ersten elektrischen Maschine, insbesondere des Rotor der ersten elektrischen Maschine, zumindest teilweise zwischen der elektrischen Maschine und der ersten Stirnradgetriebestufe, insbesondere dem ersten Stirnrad der ersten Stirnradgetriebestufe, angeordnet. Äquivalent wäre beispielsweise eine dazu umgekehrte Anordnung, wobei dann jedoch weiterhin die erste Stirnradgetriebestufe beziehungsweise das erste Stirnrad der ersten Stirnradgetriebestufe bezogen auf den Momentenfluss nach der ersten Planetengetriebestufe angeordnet ist beziehungsweise auf diese folgt.

Dann ist beispielsweise das erste Stirnrad der ersten Stirnradgetriebestufe auf einer Hohlwelle angeordnet beziehungsweise als Hohlwelle ausgebildet, durch welche beispielsweise eine Welle hindurchgeführt wird, über welche die erste Planetengetriebestufe, insbesondere das Sonnenrad der ersten Planetengetriebestufe, von der ersten elektrischen Maschine antreibbar ist beziehungsweise angetrieben wird. In der Folge kann die erste Stirnradgetriebestufe, insbesondere das erste Stirnrad der ersten Stirnradgetriebestufe, über die erste Planetengetriebestufe von der elektrischen Maschine angetrieben werden, obwohl in axialer Richtung der ersten elektrischen Maschine, insbesondere des Rotors der ersten elektrischen Maschine, dann beispielsweise die erste Stirnradgetriebestufe, insbesondere das erste Stirnrad der ersten Stirnradgetriebestufe, zumindest teilweise zwischen der ersten elektrischen Maschine und der ersten Planetengetriebestufe angeordnet ist. Ferner ist beispielsweise eine besonders lange Welle zur ersten Stirnradgetriebestufe, insbesondere zum ersten Stirnrad, denkbar, woraufhin dann beispielsweise, insbesondere unten, die zwei Planetengetriebestufen, insbesondere auf einer gemeinsamen Achse hintereinander, angeordnet sind. Die jeweilige Stirnradgetriebestufe wird auch als Stirnradsatz bezeichnet.

Besonders vorteilhaft weist die elektrische Achsantriebsvorrichtung eine konventionelle Starrachsvorrichtung auf. Durch die Konzeption der Achsantriebsvorrichtung ist es möglich, ein Teilgehäuse vorzusehen, welches zur Aufnahme der ersten elektrischen Maschine und gegebenenfalls der zweiten elektrischen Maschine und der ersten Planetengetriebestufe, der ersten Stirnradgetriebestufe, der zweiten Planetengetriebestufe und der zweiten Stirnradgetriebestufe ausgebildet ist. Das Teilgehäuse weist dabei vorteilhaft einen Flansch auf, welcher mit einem konventionellen zweiten Flansch des Achsgetriebes verbunden bzw. verbindbar ist. Der Flansch des Teilgehäuses und der zweite Flansch des Achsgetriebes weisen dabei in einem montierten Zustand eine gemeinsame Verbindungsfläche auf, welche senkrecht zu der Fahrzeuglängsrichtung angeordnet ist.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung einer erfindungsgemäßen elektrischen Achsantriebsvorrichtung gemäß einer ersten Ausführungsform;
- Fig. 2: eine schematische Darstellung der elektrischen Achsantriebsvorrichtung gemäß einer zweiten Ausführungsform;
- Fig. 3: eine schematische Seitenansicht der Achsantriebsvorrichtung gemäß einer dritten Ausführungsform;
- Fig. 4: eine schematische Seitenansicht der Achsantriebsvorrichtung gemäß einer vierten Ausführungsform;
- Fig. 5: ausschnittsweise eine schematische Draufsicht eines als Nutzfahrzeug ausgebildeten Kraftfahrzeugs, welches wenigstens eine elektrische Achsantriebsvorrichtung aufweist; und
- Fig. 6: ausschnittsweise eine schematische Seitenansicht des Kraftfahrzeugs.

In den Fig. sind gleiche oder funktionsgleiche Elemente mit gleichen Bezugszeichen versehen.

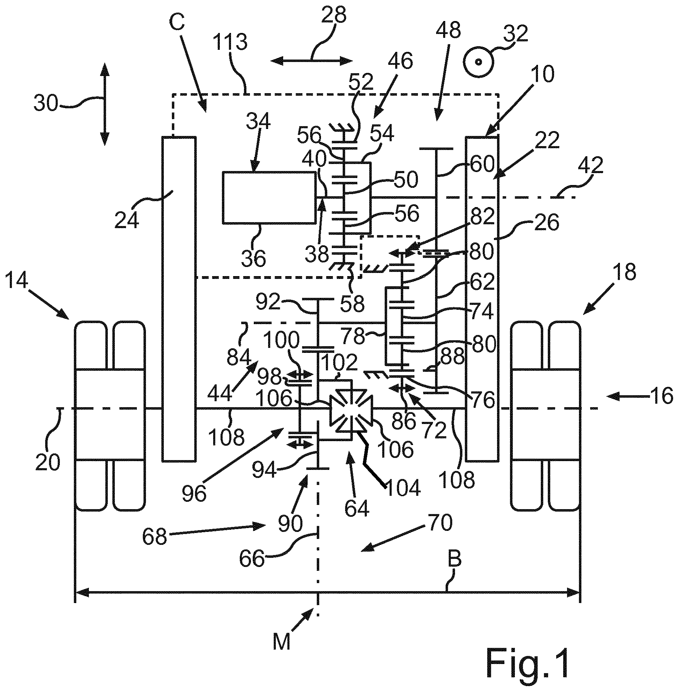

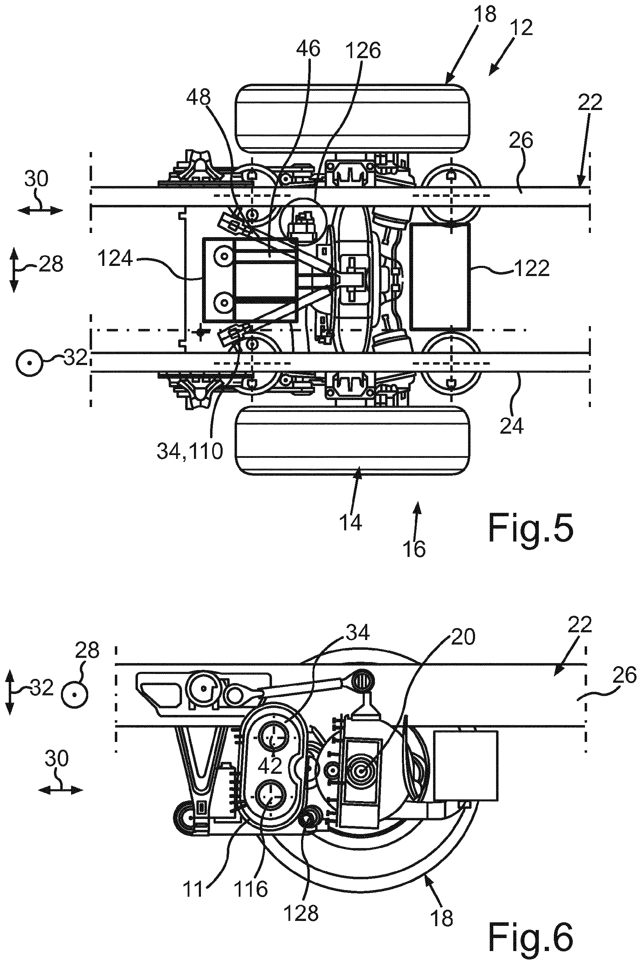

Fig. 1 zeigt in einer schematischen Darstellung eine erste Ausführungsform einer elektrischen Achsantriebsvorrichtung 10 für ein in Fig. 5 und 6 ausschnittsweise erkennbares und dort mit 12 bezeichnetes Kraftfahrzeug, welches als Nutzfahrzeug ausgebildet ist. Die elektrische Achsantriebsvorrichtung 10 umfasst beispielsweise wenigstens ein Antriebsrad 14 des Kraftfahrzeugs 12, wobei das Antriebsrad 14 beispielsweise als Zwillingsrad ausgebildet ist beziehungsweise einen Zwillingsreifen aufweist. Aus Fig. 1 ist erkennbar, dass das Antriebsrad 14 einer beispielsweise als Hinterachse oder Vorderachse ausgebildeten Achse 16 des Kraftfahrzeugs 12 zugeordnet ist, wobei die Achse 16 Bestandteil der elektrischen Achsantriebsvorrichtung 10 sein kann. Die Achse 16 umfasst das Antriebsrad 14 sowie ein zweites Antriebsrad 18, welches ebenfalls als Zwillingsrad ausgebildet sein beziehungsweise einen Zwillingsreifen aufweisen kann. Die Antriebsräder 14 und 18 sind dabei in Fahrzeugquerrichtung voneinander beabstandet angeordnet und um jeweilige, zusammenfallende und zumindest im Wesentlichen in Fahrzeugquerrichtung verlaufende Raddrehachsen 20 drehbar, insbesondere relativ zu einem auch als Fahrgestell oder Chassis bezeichneten Rahmen 22 des Nutzfahrzeugs (Kraftfahrzeug 12). Der Rahmen 22 umfasst dabei wenigstens zwei in Fahrzeugquerrichtung voneinander beabstandete Längsträger 24 und 26, welche beispielsweise über wenigstens einen in den Fig. nicht dargestellten Querträger des Rahmens 22 miteinander verbunden sind. Die Fahrzeugquerrichtung 28 ist dabei in Fig. 1 durch einen Doppelpfeil veranschaulicht, wobei die Fahrzeuglängsrichtung 30 durch einen Doppelpfeil veranschaulicht ist.

Die Fahrzeughochrichtung 32 ist durch einen Pfeil veranschaulicht und verläuft senkrecht zur Fahrzeugquerrichtung und zur Fahrzeuglängsrichtung, wobei die Fahrzeugquerrichtung senkrecht zur Fahrzeuglängsrichtung und zur Fahrzeughochrichtung verläuft. In vollständig hergestelltem Zustand des Kraftfahrzeugs 12, wenn dieses auf einer zumindest im Wesentlichen horizontalen Ebene steht, verläuft die Fahrzeughochrichtung parallel zur Vertikalen und somit senkrecht zur Horizontalen und senkrecht zur horizontalen Ebene, wobei die Fahrzeugquerrichtung zumindest im Wesentlichen parallel zur Horizontalen und zur horizontalen Ebene und senkrecht zur Vertikalen verläuft. Die Fahrzeuglängsrichtung und die Fahrzeughochrichtung spannen dabei eine insbesondere angedachte Ebene auf, welche senkrecht zur Horizontalen und senkrecht zur horizontalen Ebene verläuft, wobei die Fahrzeughochrichtung parallel zur gedachten Ebene verläuft beziehungsweise in der gedachten Ebene liegt. Da die Fahrzeuglängsrichtung auch mit x oder als x-Richtung, die Fahrzeugquerrichtung auch mit y beziehungsweise als y-Richtung und die Fahrzeughochrichtung auch als z-Richtung beziehungsweise mit z bezeichnet wird, wird die zuvor genannte, gedachte Ebene auch als x-z-Ebene bezeichnet.

Die elektrische Achsantriebsvorrichtung 10 weist wenigstens eine erste elektrische Maschine 34 auf, welche beispielsweise einen ersten Stator 36 und einen ersten Rotor 38, insbesondere mit einer auch als Rotorwelle bezeichneten Welle 40 aufweist. Der Rotor 38 und somit die Welle 40 sind dabei relativ zu dem Stator 36 um eine Maschinendrehachse 42 drehbar, insbesondere relativ zu dem Rahmen 22, wobei die Maschinendrehachse 42 zumindest im Wesentlichen in Fahrzeugquerrichtung verläuft. Dabei verläuft beispielsweise die Maschinendrehachse 42 parallel zur jeweiligen Raddrehachse 20, wobei vorzugsweise die jeweilige Raddrehachse 20 desachsiert zur Maschinendrehachse 42 ist. Mit anderen Worten fallen die jeweilige Raddrehachse 20 und die Maschinendrehachse 42 nicht zusammen, sondern sind voneinander beabstandet beziehungsweise voneinander desachsiert.

Die elektrische Achsantriebsvorrichtung 10 umfasst ferner ein im Ganzen mit 44 bezeichnetes Getriebe, welches wenigstens eine von der ersten elektrischen Maschine 34 antreibbare erste Planetengetriebestufe 46 und wenigstens eine über die erste Planetengetriebestufe 46 von der ersten elektrischen Maschine 34 antreibbare erste Stirnradgetriebestufe 48 aufweist. Die Planetengetriebestufe 46 weist ein Sonnenrad 50 als erstes Getriebeelement, ein Hohlrad 52 als zweites Getriebeelement und einen Planetenträger 54 als drittes Getriebeelement auf. Ferner weist die Planetengetriebestufe 46 erste Planetenräder 56 auf, welches jeweils drehbar an dem Planetenträger 54 gelagert sind und einerseits mit dem Hohlrad 52 und andererseits mit dem Sonnenrad 50 kämmen. Dabei ist das Sonnenrad 50 koaxial zu dem Rotor 38, insbesondere zu der Welle 40, angeordnet und drehfest mit der Welle 40 und somit mit dem Rotor 38 verbunden, sodass die Planetengetriebestufe 46 über das Sonnenrad 50 an die elektrische Maschine 34 angebunden ist. Zumindest die Getriebeelemente der Planetengetriebestufe 46 sind in einem Gehäuse 58 angeordnet, wobei beispielsweise das Hohlrad 52, insbesondere permanent, drehfest an dem Gehäuse 58 festgelegt ist. Das Sonnenrad 50 und der Planetenträger 54 können sich um eine gemeinsame Hauptdrehachse relativ zu dem Gehäuse 58 drehen, insbesondere dann, wenn die Planetengetriebestufe 46 angetrieben wird. Dabei fällt die Hauptdrehachse mit der Maschinendrehachse 42 zusammen.

Die Stirnradgetriebestufe 48 weist ein erstes Stirnrad 60 und ein zweites Stirnrad 62 auf, welche, insbesondere über jeweilige, insbesondere als Außenverzahnungen ausgebildete Verzahnungen, miteinander kämmen, sodass das Stirnrad 62 von dem Stirnrad 60 antreibbar ist. Das Stirnrad 60 ist über die Planetengetriebestufe 46 von der elektrischen Maschine 34 antreibbar, sodass das Stirnrad 62 über das Stirnrad 60 von der elektrischen Maschine 34 antreibbar ist. Das Stirnrad 60 ist dabei um eine mit der Maschinendrehachse 42 zusammenfallende Drehachse, insbesondere relativ zu dem Gehäuse 58 beziehungsweise relativ zu dem Rahmen 22, drehbar. Vorzugsweise sind die erste Planetengetriebestufe 46, die erste elektrische Maschine 34 und zumindest das Stirnrad 60, insbesondere die erste Stirnradgetriebestufe 48, in dem diesen Komponenten gemeinsamen Gehäuse 58 aufgenommen beziehungsweise angeordnet.

Wie im Folgenden noch genauer erläutert wird, sind die Antriebsräder 14 und 18 über das Getriebe 44, insbesondere über die Stirnradgetriebestufe 48 und die Planetengetriebestufe 46, von der elektrischen Maschine 34, insbesondere von dem Rotor 38, antreibbar. Zum Antreiben der Antriebsräder 14 und 18 und somit des Kraftfahrzeugs 12 insgesamt, wird die elektrische Maschine 34 in einem Motorbetrieb und somit als Elektromotor betrieben. Hierzu wird die elektrische Maschine 34 mit elektrischer Energie beziehungsweise elektrischem Strom versorgt, die beziehungsweise der in wenigstens einem Energiespeicher gespeichert ist. Der Energiespeicher ist dabei als Hochvolt-Komponente, insbesondere als Hochvolt-Batterie, ausgebildet und weist beispielsweise eine elektrische Spannung, insbesondere Betriebsspannung, von mehreren 100 Volt auf. Dadurch können besonders hohe elektrische Leistungen zum Antreiben der Antriebsräder 14 und 18 realisiert werden.

Um nun einen besonders vorteilhaften Betrieb sowie eine besonders kompakte Bauweise der elektrischen Achsantriebsvorrichtung realisieren zu können, ist ein über das Getriebe 44 von der elektrischen Maschine 34 antreibbares und auch als Differential oder Differentialgetriebe bezeichnetes beziehungsweise ausgebildetes Achsgetriebe 64 der Achse 16 vorgesehen, wobei die Antriebsräder 14 und 18 über das Achsgetriebe 64 und über das Getriebe 44 von der elektrischen Maschine 34 antreibbar sind beziehungsweise angetrieben werden, insbesondere dann, wenn die elektrische Maschine 34 in ihrem Motorbetrieb betrieben wird. Das Achsgetriebe 64 ist beispielsweise als Kegelraddifferential ausgebildet und lässt einen Drehzahlausgleich zwischen den Antriebsrädern 14 und 18 zu. Insbesondere lässt das Achsgetriebe 64 einen Drehzahlausgleich beziehungsweise unterschiedliche Drehzahlen der Antriebsräder 14 oder 18 bei einer Kurvenfahrt zu, sodass sich - während die Antriebsräder 14 und 18 von der elektrischen Maschine 34 angetrieben werden - das kurvenäußere Rad mit einer höheren Drehzahl als das kurveninnere Rad drehen kann, ohne dass es zu übermäßigen Verspannungen der Achsantriebsvorrichtung 10 kommt.

In Fig. 1 ist ferner eine durch die Fahrzeughochrichtung und die Fahrzeuglängsrichtung aufgespannte Längsmittelebene 66 gezeigt, welche auch als Fahrzeug-Längsmittelebene oder vertikale Längsmittelebene bezeichnet wird. Die Längsmittelebene 66 verläuft dabei parallel zur zuvor genannten x-z-Ebene beziehungsweise fällt mit dieser beispielsweise zusammen, wobei die Längsmittelebene 66 bezogen auf die Fahrzeugquerrichtung in beziehungsweise auf der Mitte der Achsantriebsvorrichtung 10, insbesondere der Achse 16, liegt. Die Achsantriebsvorrichtung 10, insbesondere die Achse 16, weist eine in Fahrzeugquerrichtung verlaufende Breite B auf, wobei bezogen auf die Fahrzeugquerrichtung die Mitte M der Breite B in beziehungsweise auf der Längsmittelebene 66 liegt. Mit anderen Worten geht die Längsmittelebene 66 durch die Mitte M der Breite B.

Dabei ist die elektrische Maschine 34 zumindest teilweise, insbesondere zumindest überwiegend oder vollständig, hinsichtlich der Längsmittelebene 66 auf einer ersten Seite 68 der Längsmittelebene 66 angeordnet, während die erste Stirnradgetriebestufe 48 zumindest teilweise, insbesondere zumindest überwiegend oder vollständig, auf einer der ersten Seite 68 in Fahrzeugquerrichtung gegenüberliegenden Seite 70 der Längsmittelebene 66 angeordnet ist. Hierdurch kann eine kompakte Bauweise realisiert werden, sodass die Achsantriebsvorrichtung 10 beziehungsweise die elektrische Maschine 34 mit dem Getriebe 44 sowie gegebenenfalls mit dem Achsgetriebe 64 in den Rahmen 22 und dabei zwischen die Längsträger 24 und 26 integriert werden kann, sodass beispielsweise alle Komponenten der Achsantriebsvorrichtung 10 in Fahrzeugquerrichtung zwischen den Längsträgern 24 und 26 angeordnet sind. Zu diesen Komponenten der Achsantriebsvorrichtung 10 gehören insbesondere die elektrische Maschine 34, die Planetengetriebestufe 46, die Stirnradgetriebestufe 48 beziehungsweise das Getriebe 44 insgesamt sowie das Achsgetriebe 64 sowie gegebenenfalls weitere Komponenten, die im Folgenden noch erläutert werden.

Eine der weiteren Komponenten ist beispielsweise eine zweite Planetengetriebestufe 72 des Getriebes 44 und somit der Achsantriebsvorrichtung 10. Insbesondere ist es denkbar, dass die erste Planetengetriebestufe 46 entfallen kann, sodass dann hinsichtlich der Bezeichnung die Planetengetriebestufe 72 zu der ersten und beispielsweise einzigen Planetengetriebestufe der Achsantriebsvorrichtung 10 wird.

Die zweite Planetengetriebestufe 72 umfasst ein Sonnenrad 74 als viertes Getriebeelement, ein Hohlrad 76 als fünftes Getriebeelement und einen Planetenträger 78 als sechstes Getriebeelement. Ferner umfasst die Planetengetriebestufe 72 Planetenräder 80, welche jeweils mit dem Sonnenrad 74 und mit dem Hohlrad 76 kämmen. Dabei sind die Planetenräder 80 drehbar an dem Planetenträger 78 gelagert. Die zweite Planetengetriebestufe 72 weist wenigstens ein Schaltelement 82 auf, welches - wie im Folgenden noch genauer erläutert wird - als Bremselement und/oder als Verblockungselement fungiert beziehungsweise fungieren kann oder ausgebildet ist. Bei der in Fig. 1 veranschaulichten ersten Ausführungsform ist das Schaltelement 82 als das Hohlrad 76 ausgebildet, wobei das Hohlrad 76 als Verschiebehohlrad ausgebildet ist. Hierunter ist insbesondere zu verstehen, dass das Hohlrad 76 in axialer Richtung der Planetengetriebestufe 72 relativ zu dem Gehäuse 58 beziehungsweise relativ zu einem weiteren Gehäuse, in welchem zumindest die Getriebeelemente der Planetengetriebestufe 72 angeordnet sind, bewegbar und somit verschiebbar ist. Das Schaltelement 82 beziehungsweise das Hohlrad 76 ist dabei zwischen einer in Fig. 1 gezeigten Neutralstellung, wenigstens einer Verblockungsstellung und wenigstens einer Bremsstellung bewegbar beziehungsweise verschiebbar, wobei die Neutralstellung auch eine Freigabestellung und eine Lösestellung des Schaltelements 82 ist. Bei dem weiteren Gehäuse handelt es sich beispielsweise um das Gehäuse 58 oder um ein anderes, insbesondere separates beziehungsweise zusätzliches Gehäuse.

Grundsätzlich sind die Getriebeelemente der Planetengetriebestufe 72 um eine in Fig. 1 mit 84 bezeichnete Hauptdrehachse relativ zu dem Gehäuse 58 beziehungsweise relativ zu dem genannten weiteren Gehäuse, in welchem die Getriebeelemente der Planetengetriebestufe 72 angeordnet sind, drehbar, wobei die Hauptdrehachse 84 beispielsweise zumindest im Wesentlichen parallel zur Hauptdrehachse der Planetengetriebestufe 46 verläuft, wobei die Hauptdrehachsen vorzugsweise voneinander beabstandet beziehungsweise desachsiert voneinander sind. Ferner ist die Hauptdrehachse 84 desachsiert zu der Maschinendrehachse 42 und den Raddrehachsen 20 angeordnet.

Die axiale Verschiebbarkeit des Schaltelements 82 ist in Fig. 1 durch einen Doppelpfeil 86 veranschaulicht. Ausgehend von der in Fig. 1 gezeigten Neutralstellung kann beispielsweise das Schaltelement 82, das heißt das Hohlrad 76 in axialer Richtung der Planetengetriebestufe 72 nach links in die genannte Bremsstellung bewegt werden, wobei die axiale Richtung der Planetengetriebestufe 72 mit der Hauptdrehachse 84 zusammenfällt. In der Bremsstellung ist das Hohlrad 76 drehfest an dem Gehäuse 58 beziehungsweise an dem weiteren Gehäuse festgelegt, sodass sich dann das Hohlrad 76 nicht mehr um die Hauptdrehachse 84 relativ zu dem Gehäuse 58 beziehungsweise relativ zu dem weiteren Gehäuse drehen kann, insbesondere auch dann nicht, wenn die Planetengetriebestufe 72 angetrieben wird. Der besseren Lesbarkeit wegen wird im Folgenden lediglich von dem Gehäuse 58 gesprochen, wobei unter dem Gehäuse 58 ohne Weiteres auch das weitere Gehäuse verstanden werden kann.

Um beispielsweise das Schaltelement 82 beziehungsweise das Hohlrad 76 ausgehend von der in Fig. 1 gezeigten Neutralstellung in die Verblockungsstellung zu bewegen, wird das Schaltelement 82 beziehungsweise das Hohlrad 76 in axialer Richtung der Planetengetriebestufe 72 relativ zu dem Gehäuse 58 nach rechts geschoben. In dem Verblockungszustand ist das Hohlrad 76, insbesondere über das Stirnrad 62, mit dem Sonnenrad 74 der Planetengetriebestufe 72 verblockt, sodass beispielsweise dann, wenn die Planetengetriebestufe 72 angetrieben wird, das Hohlrad 76 und das Sonnenrad 74 als Block und somit gemeinsam um die Hauptdrehachse 84 relativ zu dem Gehäuse 58 umlaufen. Hierzu ist beispielsweise an dem Stirnrad 62 eine Schaltverzahnung 88 vorgesehen, mit welcher das Hohlrad 76, insbesondere über seine Innenverzahnung, in der Verblockungsstellung formschlüssig zusammenwirkt, wodurch das Hohlrad 76 über das Stirnrad 62 mit dem Sonnenrad 74 verblockt ist. Somit sind das Hohlrad 76 und das Sonnenrad 74 auch mit dem Stirnrad 62 verblockt. Dabei ist das Sonnenrad 74 koaxial zu dem Stirnrad 62 angeordnet und drehfest mit dem Stirnrad 62 verbunden, wodurch die Planetengetriebestufe 72 an die Stirnradgetriebestufe 48 angebunden ist. Die Stirnradgetriebestufe 48 ist ferner über das Stirnrad 60 an den Planetenträger 54 und somit an die Planetengetriebestufe 46 angebunden, wobei das Stirnrad 60 koaxial zum Planetenträger 54 angeordnet und drehfest mit diesem verbunden ist.

In der als Lösestellung oder als Freigabestellung ausgebildeten Neutralstellung gibt das Schaltelement 82 das Hohlrad 76 für eine jeweilige Drehung relativ zu dem Gehäuse 58 und relativ zu dem Sonnenrad 74 um die Hauptdrehachse 84 frei, sodass sich beispielsweise dann, wenn die Planetengetriebestufe 72 angetrieben wird, das heißt wenn Drehmomente in sie eingeleitet werden, sich das Hohlrad 76 um die Hauptdrehachse 84 relativ zu dem Gehäuse 58 und relativ zu dem Sonnenrad 74 drehen kann. Steht beispielsweise das Kraftfahrzeug 12 über die Antriebsräder 14 und 18 auf einem Boden beziehungsweise auf einer Fahrbahn, werden dabei beispielsweise die Antriebsräder 14 und 18 gebremst, sodass sie gegen eine Drehung relativ zu dem Rahmen 22 um die Raddrehachsen 20 gesichert sind, befindet sich das Schaltelement 82 in der Neutralstellung wird dabei die Planetengetriebestufe 72 angetrieben, da beispielsweise die elektrische Maschine 34 läuft und wenigstens ein, insbesondere geringes, Antriebsmoment bereitstellt, welches über die Planetengetriebestufe 46 und die Stirnradgetriebestufe 48 in die Planetengetriebestufe 72 eingeleitet wird, so läuft zwar die elektrische Maschine 34 beziehungsweise die elektrische Maschine 34 wird dann zwar in ihrem Motorbetrieb betrieben, jedoch unterbleibt ein Antreiben der Antriebsräder 14 und 18 und somit des Kraftfahrzeugs 12 insgesamt und die Antriebsräder 14 und 18 stehen im Motorbetrieb der elektrischen Maschine 34 dann auch nicht entgegen, sodass die elektrische Maschine 34 mit geringer Last in ihrem Motorbetrieb betrieben werden kann. Der Planetenträger 78 wird beispielsweise von den abgebremsten Antriebsrädern 14 und 18 festgehalten, sodass beispielsweise das Hohlrad 76 über die Planetenräder 80, das Sonnenrad 74, die Stirnradgetriebestufe 48 und die Planetengetriebestufe 46 auf einfache Weise, das heißt mit nur geringer Last beziehungsweise mit einem nur geringem Drehmoment von der elektrischen Maschine 34 gedreht werden kann, insbesondere um die Hauptdrehachse 84 relativ zu dem Gehäuse 58. Hierdurch kann - ohne dass die Antriebsräder 14 und 18 angetrieben werden - die elektrische Maschine 34 mit nur geringer Last laufen, sodass beispielsweise eine vorteilhafte Kühlung der elektrischen Maschine 34 aufrechterhalten werden kann, ohne dass das Kraftfahrzeug 12 angetrieben wird. Somit ist dadurch ein Leerlauf der Achsantriebsvorrichtung 10 realisierbar, dass das Schaltelement 82 beziehungsweise das Hohlrad 76 in die Neutralstellung bewegt wird. Durch die weitere Möglichkeit, das Schaltelement 82 in die Bremsstellung und in die Verblockungsstellung zu bewegen, können durch die Bremsstellung und durch die Verblockungsstellung wenigstens zwei, insbesondere voneinander unterschiedliche, Übersetzungen dargestellt werden, über die die Räder 14 und 18 von der elektrischen Maschine 34 angetrieben werden können. Durch diese Realisierbarkeit der wenigstens zwei, insbesondere voneinander unterschiedlichen, Übersetzungen können wenigstens zwei schaltbare Gänge der elektrischen Achsantriebsvorrichtung 10 auf einfache und bauraumgünstige Weise geschaffen werden, wobei sich diese schaltbaren Gänge beispielsweise in ihren Übersetzungen voneinander unterscheiden. Ein erster der Gänge ist beispielsweise dann eingelegt, wenn sich das Schaltelement 82 in seiner Bremsstellung befindet. Ein zweiter der Gänge ist beispielsweise dann eingelegt, wenn sich das Schaltelement 82 in seiner Verblockungsstellung befindet.

Zum Bewegen des Schaltelements 82 zwischen der Neutralstellung, der Verblockungsstellung und der Bremsstellung ist beispielsweise ein in den Fig. nicht dargestellter Aktor vorgesehen, mittels welchem das Schaltelement 82 in axialer Richtung der Planetengetriebestufe 72 beziehungsweise entlang der Hauptdrehachse 84 relativ zu dem Gehäuse 58 verschoben werden kann.

Um auf bauraumgünstige Weise eine besonders vorteilhafte Übersetzung, insbesondere Gesamtübersetzung, der Achsantriebsvorrichtung 10 beziehungsweise des Getriebes 44 zu realisieren, weist das Getriebe 44 eine zweite Stirnradgetriebestufe 90 auf. Die zweite Stirnradgetriebestufe 90 weist ein drittes Stirnrad 92 und ein mit dem dritten Stirnrad 92 kämmendes viertes Stirnrad 94 auf, welches beispielsweise über das Stirnrad 92, die Planetengetriebestufe 72, die Stirnradgetriebestufe 48 und die Planetengetriebestufe 46 von der elektrischen Maschine 34 antreibbar ist. Die Planetengetriebestufe 72 ist derart an die Stirnradgetriebestufe 48 angeordnet, dass - wie bereits erläutert - das Sonnenrad 74 koaxial zum Stirnrad 62 angeordnet und drehfest mit dem Stirnrad 62 verbunden ist. Des Weiteren ist die Planetengetriebestufe 72 derart an die zweite Stirnradgetriebestufe 90 angebunden, dass das Stirnrad 92 koaxial zum Planetenträger 78 angeordnet und drehfest mit dem Planetenträger 78 verbunden ist.

Bei der ersten Ausführungsform ist es vorgesehen, dass bezogen auf einen Drehmomentenfluss von der elektrischen Maschine 34 zu dem jeweiligen Antriebsrad 14 beziehungsweise 18 die erste Planetengetriebestufe 46 nach der ersten elektrischen Maschine 34 und vor dem Antriebsrad 14 beziehungsweise 18, die erste Stirnradgetriebestufe 48 nach der ersten Planetengetriebestufe 46 und vor dem Antriebsrad 14 beziehungsweise 18, die zweite Planetengetriebestufe 72 nach der ersten Stirnradgetriebestufe 48 und vor dem Antriebsrad 14 beziehungsweise 18 und die zweite Stirnradgetriebestufe 90 nach der zweiten Planetengetriebestufe 72 und vor dem Antriebsrad 14 beziehungsweise 18 angeordnet ist.

Dabei ist die zweite Planetengetriebestufe 72 zumindest teilweise, insbesondere zumindest überwiegend oder vollständig, auf der zweiten Seite 70 angeordnet. Außerdem ist die zweite Stirnradgetriebestufe 90 auf beziehungsweise in der Längsmittelebene 66 angeordnet, sodass beispielsweise die Längsmittelebene 66 bezogen auf die Fahrzeugquerrichtung durch die Mitte der Stirnräder 92 und 94 verläuft.

Außerdem ist die elektrische Maschine 34 zumindest zu zwei Dritteln, insbesondere ihres Volumens beziehungsweise ihrer Außenabmessungen, auf der ersten Seite 68 angeordnet. Mit anderen Worten ist beispielsweise die elektrische Maschine 34 zumindest teilweise, insbesondere zumindest überwiegend oder vollständig, auf der ersten Seite 68 angeordnet.

Die Planetengetriebestufe 72 und die Stirnradgetriebestufe 90 können dabei zu den zuvor genannten, weiteren Komponenten der Achsantriebsvorrichtung 10 gehören, die in Fahrzeugquerrichtung zwischen den Längsträgern 24 und 26 angeordnet sind. Ferner ist es denkbar, dass das Achsgetriebe 64 an der Komponente der Achsantriebsvorrichtung 10 ist.

Zu den weiteren Komponenten der Achsantriebsvorrichtung 10 kann ferner beispielsweise eine Differentialsperre 96 gehören, welche wenigstens ein Sperrelement 98 aufweist. Wie in Fig. 1 durch einen Doppelpfeil 100 veranschaulicht ist, kann das Sperrelement 98 beispielsweise in axialer Richtung des Achsgetriebes 64 entlang der jeweiligen Raddrehachse 20 verschoben und dadurch zwischen einem Sperrzustand und einem Entsperrzustand bewegt werden, wobei die Funktion der Differentialsperre 96, welche beispielsweise als elektronische Differentialsperre ausgelegt ist, aus dem allgemeinen Stand der Technik hinlänglich bekannt ist.

Ferner ist erkennbar, dass beispielsweise das Stirnrad 94 ein herkömmlicherweise bei einem Differential vorgesehenes Tellerrad ersetzen kann, sodass beispielsweise das Stirnrad 94 drehfest mit einem Differentialkorb 102 verbunden ist, sodass der Differentialkorb 102 von dem Stirnrad 94 antreibbar und dadurch um die jeweilige Raddrehachse 20, insbesondere relativ zu dem Rahmen 22, drehbar ist. Auf diese Weise können über den Differentialkorb 102 auf hinlänglich bekannte Weise Ausgleichsräder 104 des Achsgetriebes 94 angetrieben werden. Über die Ausgleichsräder 104 können wiederum Abtriebsräder 106 angetrieben werden, wobei die Abtriebsräder 106 und die Ausgleichsräder 104 beispielsweise als Kegelräder ausgebildet sind, welche miteinander kämmen. Die Abtriebsräder 106 sind beispielsweise drehfest mit auch als Antriebswellen bezeichneten Seitenwellen 108 verbunden, über welche die Antriebsräder 14 und 18 angetrieben werden können.

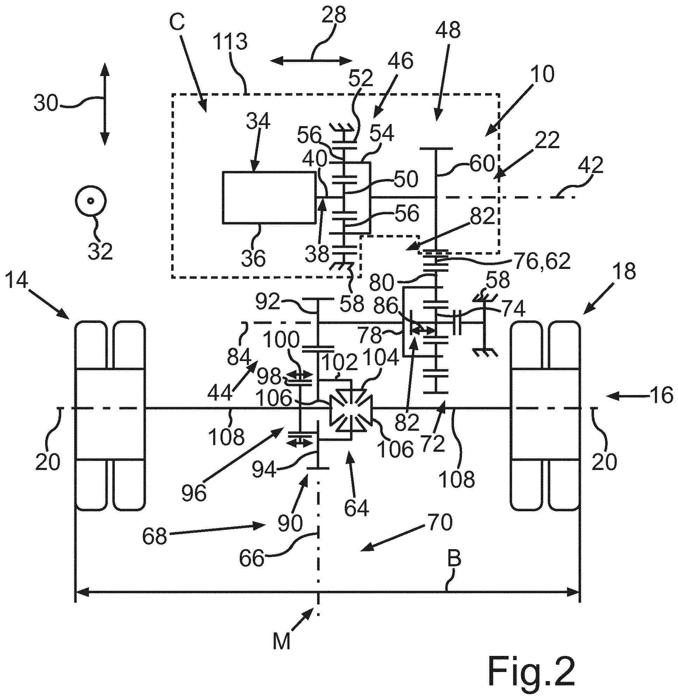

Fig. 2 zeigt eine zweite Ausführungsform der Achsantriebsvorrichtung 10. Die zweite Ausführungsform unterscheidet sich insbesondere dadurch von der ersten Ausführungsform, dass das Schaltelement 82 nicht als Verschiebehohlrad, sondern als Verschiebesonnenrad ausgebildet ist. Das Verschiebesonnenrad wird auch als Verschiebesonne bezeichnet und ist das Sonnenrad 74, welches in axialer Richtung der Planetengetriebestufe 72 und somit entlang der Hauptdrehachse 84 relativ zu dem Gehäuse 58 verschiebbar und dadurch zwischen der Neutralstellung, der Bremsstellung und der Verblockungsstellung bewegbar ist. In der Neutralstellung ist der zuvor beschriebene Leerlauf eingestellt, sodass die elektrische Maschine 34 mit nur geringer Last laufen, das heißt in dem Motorbetrieb betrieben werden kann, ohne dass die Antriebsräder 14 und 18 angetrieben werden. In der Bremsstellung, in der Darstellung der Fig. 2 die rechte Stellung, ist das Sonnenrad 74 gebremst und dadurch drehfest an dem Gehäuse 58 festgelegt. In der Verblockungsstellung, in der Darstellung der Fig. 2 die linke Stellung, ist beispielsweise das Sonnenrad 74 mit dem Planetenträger 78 verblockt, sodass dann, wenn die Planetengetriebestufe 72 angetrieben wird, das Sonnenrad 74 und der Planetenträger 78 als Block und somit gemeinsam um die Hauptdrehachse 84 umlaufen.

Die Ausführungsformen der Fig. 1 und der Fig. 2 stellen jeweils hinsichtlich eines Packaging von Komponenten der elektrischen Antriebsvorrichtung 10, einer elektrischen Leistung und einer Getriebeübersetzung der elektrischen Antriebsvorrichtung ein ideales Gesamtsystem dar.

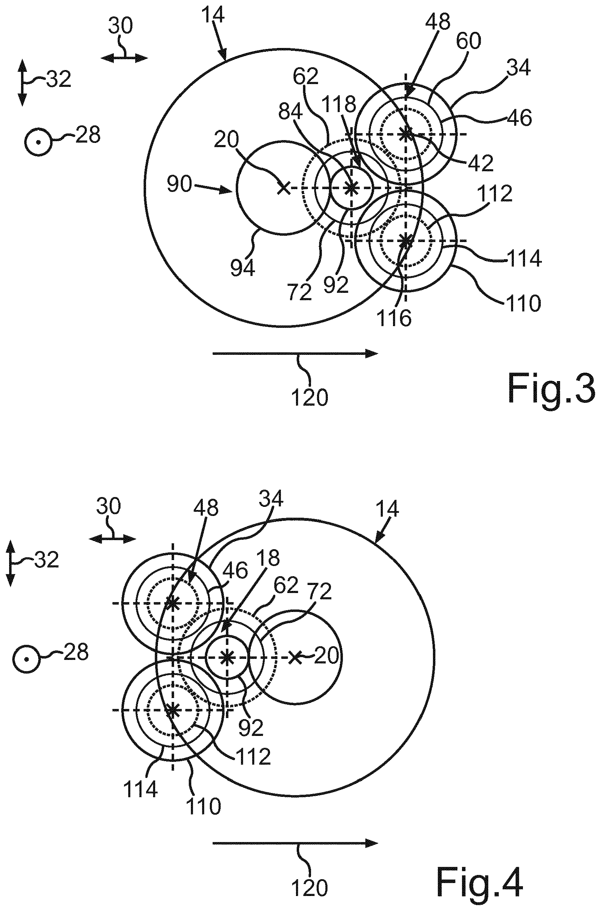

Fig. 3 zeigt eine dritte Ausführungsform, wobei Fig. 4 eine vierte Ausführungsform zeigt. Aus Fig. 3 und 4 ist erkennbar, dass die Achsantriebsvorrichtung 10 eine zweite elektrische Maschine 110 aufweisen kann, wobei die vorigen und folgenden Ausführungen zur ersten elektrischen Maschine 34 ohne Weiteres auch auf die zweite elektrische Maschine 110 übertragen werden können und umgekehrt. In Fig. 1 und 2 ist jeweils eine gestrichelte Linie 113 gezeigt, welche einen Bereich C von Fig. 1 beziehungsweise von Fig. 2 umgibt. In diesem Bereich C sind Komponenten in Form der elektrischen Maschine 34, der Planetengetriebestufe 46 und des Stirnrads 60 gezeigt beziehungsweise enthalten, wobei die in dem Bereich C gezeigten beziehungsweise dargestellten Komponenten vorteilhafter Weise zweifach vorgesehen sein können, was in Fig. 3 und 4 veranschaulicht ist. Somit ist beispielsweise der zweiten elektrischen Maschine 110 eine dritte Planetengetriebestufe zugeordnet, auf welche die vorigen und folgenden und sich auf die elektrische Maschine 34 und das Stirnrad 60 beziehenden Ausführungen ohne Weiteres übertragen werden können, dann jedoch in Bezug auf die zweite elektrische Maschine 110 und auf ein weiteres Stirnrad 112, welches von der zweiten elektrischen Maschine 110, insbesondere über die in Fig. 3 mit 114 bezeichnete dritte Planetengetriebestufe, antreibbar ist. Aus Fig. 3 ist dabei erkennbar, dass das weitere Stirnrad 112 mit dem zweiten Stirnrad 62 der ersten Stirnradgetriebestufe 48 kämmt, sodass beispielsweise das weitere Stirnrad 112 zur ersten Stirnradgetriebestufe 48 gehört.

Da die folgenden und vorigen Ausführungen zur elektrischen Maschine 34 ohne weiteres auch auf die zweite elektrische Maschine 110 übertragen werden können und umgekehrt, weist beispielsweise auch die zweite elektrische Maschine 110 einen zweiten Stator und zweiten Rotor auf, welcher um eine weitere Maschinendrehachse 116 relativ zum zweiten Stator drehbar ist. Dabei ist der jeweilige Rotor von dem jeweiligen Stator antreibbar und dadurch um die jeweilige Maschinendrehachse 42 beziehungsweise 116 drehbar. Aus Fig. 3 ist besonders gut erkennbar, dass die Maschinendrehachse 116 desachsiert von der Maschinendrehachse 42, von der Hauptdrehachse 84 und von der Raddrehachse 20 angeordnet ist. Dabei liegen beispielsweise die Hauptdrehachse 84 und die Raddrehachse 20 in einer durch die Fahrzeugquerrichtung und die Fahrzeuglängsrichtung aufgespannten Ebene, welche somit zumindest im Wesentlichen senkrecht zur Fahrzeughochrichtung verläuft. Ferner liegen die Maschinendrehachsen 42 und 116 in einer gemeinsamen, durch die Fahrzeughochrichtung und die Fahrzeugquerrichtung aufgespannten und beispielsweise senkrecht zur Fahrzeuglängsrichtung verlaufenden Ebene, wobei insbesondere die zweite elektrische Maschine 110 entlang einer senkrecht zur Fahrzeugquerrichtung verlaufenden Richtung, insbesondere entlang der Fahrzeughochrichtung, mit der ersten elektrischen Maschine 34 fluchtet. Außerdem sind die elektrischen Maschinen 34 und 110 in Fahrzeughochrichtung übereinander angeordnet, wobei sie beispielsweise derart deckungsgleich angeordnet sind, dass die elektrische Maschine 110 in Fahrzeughochrichtung nach oben hin vollständig durch die elektrische Maschine 34 überdeckt ist, während die elektrische Maschine 34 in Fahrzeughochrichtung nach unten hin vollständig durch die elektrische Maschine 110 überdeckt ist.

Außerdem bilden die elektrischen Maschinen 34 und 110 einen Zwickel 118, in welchem zumindest ein Teil des Stirnrads 92 angeordnet ist, sodass das Stirnrad 92, insbesondere der genannte Teil des Stirnrads 92, in Fahrzeughochrichtung nach oben hin durch die elektrische Maschine 34 und in Fahrzeughochrichtung nach unten hin durch die elektrische Maschine 110 überdeckt ist.

Ferner ist in Fig. 3 durch einen Pfeil 120 die Vorwärtsfahrtrichtung des Kraftfahrzeugs 12 veranschaulicht. Bei der in Fig. 3 veranschaulichten dritten Ausführungsform sind die elektrischen Maschinen 34 und 110 vor dem Antriebsrad 14 beziehungsweise 18 beziehungsweise vor der Raddrehachse 20 angeordnet, wobei die elektrische Maschine 34 und 110 bei der in Fig. 4 gezeigten vierten Ausführungsform hinter dem Antriebsrad 14 beziehungsweise hinter der Raddrehachse 20 angeordnet sind.

Die Ausführungsformen der Fig. 3 und der Fig. 4 stellen gegenüber den Ausführungsformen der Figuren 1 und 2 Weiterentwicklungen des Gesamtsystems der elektrischen Antriebsvorrichtung 10 dar. Insbesondere ist es vorteilhaft, zum Zwecke einer Leistungssteigerung zwei elektrische Maschinen 34, 110 in der gezeigten speziellen Anordnung zusammen mit den gezeigten Getriebestufen in deren speziellen Anordnung einzusetzen.

Fig. 5 zeigt das Kraftfahrzeug 12 ausschnittsweise in einer schematischen Draufsicht, wobei aus Fig. 5 besonders gut die Integration der Achsantriebsvorrichtung 10 zwischen die Längsträger 24 und 26 erkennbar ist. In Fig. 5 ist mit 122 ein insbesondere bei der dritten Ausführungsform zur Verfügung stehender Bauraum bezeichnet, in welchem beispielsweise eine Leistungselektronik und/oder wenigstens ein Kühler sowie beispielsweise Öl- und/oder Wasseranschlüsse angeordnet werden können. Bei dem Kühler handelt es sich beispielsweise um einen Wärmetauscher und/oder um einen Öl- und/oder Wasserkühler.

Ferner ist in Fig. 5 mit 124 ein insbesondere bei der vierten Ausführungsform zur Verfügung stehender Bauraum bezeichnet, in welchem beispielsweise eine Leistungselektronik und/oder wenigstens ein insbesondere als Wärmetauscher ausgebildeter Kühler sowie gegebenenfalls Öl- und/oder Wasseranschlüsse angeordnet werden können, wobei die vorigen und folgenden Ausführungen zu dem Bauraum 122 auch auf den Bauraum 124 übertragen werden können und umgekehrt. Somit ist es also möglich, dass ein Kühler, insbesondere ein Ölkühler, und/oder eine Leistungselektronik auf einer dem Achsgetriebe 64 abgewandten Seite der ersten elektrischen Maschine 34 oder auf einer der ersten elektrischen Maschine 34 abgewandten Seite des Achsgetriebes 64 angeordnet ist.

Gegebenenfalls kann die erste Planetengetriebestufe 46 weggelassen werden, sodass dann beispielsweise hinsichtlich der Bezeichnung beziehungsweise begriffstechnisch die zweite Planetengetriebestufe 72 als erste Planetengetriebestufe bezeichnet wird und beispielsweise als einzige Planetengetriebestufe vorgesehen ist. Ferner ist es denkbar, bei der Achsantriebsvorrichtung 10 lediglich eine der elektrischen Maschinen 34 und 110 vorzusehen, sodass beispielsweise genau eine elektrische Maschine 34 beziehungsweise 110 vorgesehen ist. Auch dadurch kann ein hinreichend vorteilhafter Antrieb der Antriebsräder 14 und 18 mit einer hinreichenden Leistung dargestellt werden.

Des Weiteren ist in Fig. 5 beispielsweise eine Aktorik 126 erkennbar, mittels welcher beispielsweise das Schaltelement 82 bewegbar, insbesondere verschiebbar, ist, sodass beispielsweise die Aktorik 126 der zuvor genannten Aktor zum Bewegen beziehungsweise Verschieben des Schaltelements 82 ist.

Schließlich zeigt Fig. 6 das Kraftfahrzeug 12 ausschnittsweise in einer schematischen Seitenansicht, wobei aus Fig. 6 besonders gut die Platzierung der übereinander angeordneten elektrischen Maschinen 34 und 110 erkennbar ist. Außerdem ist aus Fig. 6 ein Stabilisierungsträger 128 erkennbar.

Insgesamt ist aus den Fig. erkennbar, dass die beispielsweise als Vorder- oder Hinterachse ausgebildete Achse 16 mittels der als Elektromotoren betreibbaren elektrischen Maschinen 34 und 110 besonders vorteilhaft sowie bauraumgünstig angetrieben werden kann, wobei die jeweilige, als Planetengetriebe ausgebildete Planetengetriebestufe 46 beziehungsweise 114 direkt an die jeweilige elektrische Maschine 34 beziehungsweise 110 angeflanscht ist und somit mit der jeweiligen elektrischen Maschine 34 beziehungsweise 110 beispielsweise ein besonders einfach handhabbares und montierbares Modul bildet. Über die auf die elektrischen Maschinen 34 und 110, insbesondere auf die Planetengetriebestufen 46 und 114, folgende Stirnradgetriebestufe 48 werden jeweilige, von den elektrischen Maschinen 34 und 110 bereitgestellte und auch als Antriebsmomente bezeichnete Drehmomente auf das Stirnrad 62 vereinigt, da sowohl das Stirnrad 60 als auch das Stirnrad 112 mit dem Stirnrad 62 kämmt. Auf das Stirnrad 62 und somit auf die Stirnradgetriebestufe 48 folgt die zweite Planetengetriebestufe 72, welche optional schaltbar sein kann. Dadurch können verschiedene Übersetzungen sowie die Neutralstellung dargestellt werden.

Ein weiterer Unterschied zwischen der zweiten und ersten Ausführungsform ist, dass - während bei der ersten Ausführungsform die zweite Planetengetriebestufe 72 auf die beschriebene Weise über das Sonnenrad 74 an die Stirnradgetriebestufe 48 angebunden ist - bei der zweiten Ausführungsform die zweite Planetengetriebestufe 72 über das Hohlrad 76 an die erste Stirnradgetriebestufe 48 angebunden ist. Hierzu weist beispielsweise das Hohlrad 76 seine Innenverzahnung auf, über welche das Hohlrad 76 mit den Planetenrädern 80 kämmt. Ferner weist beispielsweise das Hohlrad 76 eine Außenverzahnung auf, durch welche das Stirnrad 62 gebildet ist. Das Hohlrad 76 beziehungsweise das Stirnrad 62 kämmt somit über die genannte Außenverzahnung des Hohlrads 76 mit dem Stirnrad 60. Bei der ersten Ausführungsform stellt somit das Sonnenrad 74 einen Antrieb der Planetengetriebestufe 72 dar, wobei bei der zweiten Ausführungsform der Antrieb der Planetengetriebestufe 72 durch das Hohlrad 76 realisiert ist. Bei der ersten Ausführungsform und bei der zweiten Ausführungsform ist der Planetenträger 78 ein Abtrieb der Planetengetriebestufe 72, die über den Abtrieb an die zweite Stirnradgetriebestufe 90 angebunden ist. Die Stirnradgetriebestufe 90 ist eine weitere beziehungsweise zweite Stirnradgruppe, über welche das jeweilige Antriebsmoment beziehungsweise die summierten Antriebsmomente und somit ein aus den Antriebsmomenten resultierendes Gesamtdrehmoment auf das beispielsweise als Differential ausgebildete Achsgetriebe 64 übertragen wird.

Ferner ist es möglich, eine Differentialsperre besonders einfach zu integrieren. Von dem Achsgetriebe 64 wird dann das Gesamtdrehmoment über die Seitenwellen auf die Antriebsräder 14 und 18 übertragen. Durch die beschriebene und aus den Fig. erkennbare Anordnung der elektrischen Maschinen 34 und 110 sowie des Getriebes 44, zu welchem beispielsweise insbesondere auch die dritte Planetengetriebestufe 114 gehört, kann ein gegebener Bauraum besonders effektiv und effizient sowie insbesondere vollständig ausgenutzt werden. Einerseits kann sehr schmal gebaut werden, um zwischen den Längsträgern 24 und 26 an etwaig vorgesehene Federbalge zu kommen und zwischen diesen die Achsantriebsvorrichtung 10 zu integrieren. Andererseits kann ein großer lokaler Freigang für einen Stabilisator und/oder einen Dreieckslenker dargestellt werden. Ferner ist es denkbar, die elektrischen Maschinen 34 und 110 vor (Fig. 3) oder hinter (Fig. 4) der Achse 16 beziehungsweise der Raddrehachsen 20 anzuordnen. Damit kann man etwaigen Bauraumrestriktionen nachkommen, oder es wird Platz für einen Energiespeicher, eine Leistungselektronik, eine Klimatisierungstechnik und/oder andere Bauelemente geschaffen.

### Bezugszeichenliste

- 10: Achsantriebsvorrichtung
- 12: Kraftfahrzeug
- 14: Antriebsrad
- 16: Achse
- 18: Antriebsrad
- 20: Raddrehachse
- 22: Rahmen
- 24: Längsträger
- 26: Längsträger
- 28: Fahrzeugquerrichtung
- 30: Doppelpfeil
- 32: Fahrzeughochrichtung
- 34: erste elektrische Maschine
- 36: Stator
- 38: Rotor
- 40: Welle
- 42: Maschinendrehachse
- 44: Getriebe
- 46: erste Planetengetriebestufe
- 48: erste Stirnradgetriebestufe
- 50: Sonnenrad
- 52: Hohlrad
- 54: Planetenträger
- 56: Planetenrad
- 58: Gehäuse
- 60: erstes Stirnrad
- 62: zweites Stirnrad
- 64: Achsgetriebe
- 66: Längsmittelebene
- 68: erste Seite
- 70: zweite Seite
- 72: zweite Planetengetriebestufe
- 74: Sonnenrad
- 76: Hohlrad
- 78: Planetenträger
- 80: Planetenrad
- 82: Schaltelement
- 84: Hauptdrehachse
- 88: Schaltverzahnung
- 90: zweite Stirnradgetriebestufe
- 92: drittes Stirnrad
- 94: viertes Stirnrad
- 96: Differentialsperre
- 98: Sperrelement
- 100: Doppelpfeil
- 102: Differentialkorb
- 104: Ausgleichsrad
- 106: Abtriebsrad
- 108: Seitenwelle
- 110: zweite elektrische Maschine
- 112: weiteres Stirnrad
- 113: Linie
- 114: dritte Planetengetriebestufe
- 116: zweite Maschinendrehachse
- 118: Zwickel
- 120: Pfeil
- 122: Bauraum
- 124: Bauraum
- 126: Aktorik
- 128: Stabilisierungsträger
- B: Breite
- C: Bereich
- M: Mitte

## Patentansprüche

1. Elektrische Achsantriebsvorrichtung (10) für ein Kraftfahrzeug (12), mit wenigstens einer ersten elektrischen Maschine (34), welche einen Stator (36) und einen Rotor (38) aufweist, der um eine Maschinendrehachse (42) relativ zu dem Stator (36) drehbar ist, mit einem von der ersten elektrischen Maschine (34) antreibbaren Getriebe (44), welches
- genau zwei Planetengetriebestufen (46, 72), nämlich eine von der ersten elektrischen Maschine (34) antreibbare erste Planetengetriebestufe (46) und eine von der elektrischen Maschine (34) antreibbare zweite Planetengetriebestufe (72),
- und genau zwei Stirnradgetriebestufen (48, 90), nämlich eine von der ersten elektrischen Maschine (34) antreibbare erste Stirnradgetriebestufe (48), die ein erstes Stirnrad (60) und ein mit dem ersten Stirnrad (60) kämmendes zweites Stirnrad (62) aufweist, und eine zweite Stirnradgetriebestufe (90)
aufweist,
und mit wenigstens einem um eine parallel zur Maschinendrehachse (42) verlaufende Raddrehachse (20) drehbaren und über das Getriebe (44) von der ersten elektrischen Maschine (34) antreibbaren Antriebsrad (14) des Kraftfahrzeugs (12),
wobei ein über das Getriebe (44) von der ersten elektrischen Maschine (34) antreibbares Achsgetriebe (64) vorgesehen ist, über welches das Antriebsrad (14) von der ersten elektrischen Maschine (34) antreibbar ist;
wobei
- die erste elektrische Maschine (34) hinsichtlich einer durch die Fahrzeughochrichtung (32) und die Fahrzeuglängsrichtung (30) aufgespannten Längsmittelebene (66) des Kraftfahrzeugs (12) zumindest teilweise auf einer ersten Seite (68) der Längsmittelebene (66) angeordnet ist; und
- die erste Stirnradgetriebestufe (48) auf einer der ersten Seite (68) in Fahrzeugquerrichtung (28) gegenüberliegenden zweiten Seite (70) der Längsmittelebene (66) angeordnet ist
**dadurch gekennzeichnet, dass**
- bezogen auf einen Drehmomentenfluss von der ersten elektrischen Maschine (34) zu dem Antriebsrad (14), die erste Planetengetriebestufe (46) nach der ersten elektrischen Maschine (34) und vor dem Antriebsrad (14), die erste Stirnradgetriebestufe (48) nach der ersten Planetengetriebestufe (46) und vor dem Antriebsrad (14), die zweite Planetengetriebestufe (72) nach der ersten Stirnradgetriebestufe (48) und vor dem Antriebsrad (14) und die zweite Stirnradgetriebestufe (90) nach der zweiten Planetengetriebestufe (72) und vor dem Antriebsrad (14) angeordnet ist,
- ein Bremselement (82) vorgesehen ist, mittels welchem ein Getriebeelement der ersten Planetengetriebestufe (46) oder ein Getriebeelement der zweiten Planetengetriebestufe (72) an einem Gehäuse (58) des Getriebes (44) festlegbar ist, wobei das Bremselement (82) ein in axialer Richtung der jeweiligen Planetengetriebestufe (72) relativ zu dem Gehäuse (58) verschiebbares Hohlrad (76) aufweist.

2. Elektrische Achsantriebsvorrichtung (10) nach Anspruch 1,
**dadurch gekennzeichnet, dass**
wenigstens ein Verblockungselement (82) vorgesehen ist, mittels welchem wenigstens zwei Getriebeelemente der zweiten Planetengetriebestufe (72) miteinander verblockbar sind.

3. Elektrische Achsantriebsvorrichtung (10) nach Anspruch 1 oder 2,
**dadurch gekennzeichnet, dass**
die zweite Planetengetriebestufe (72) überwiegend auf der zweiten Seite (70) angeordnet ist.

4. Elektrische Achsantriebsvorrichtung (10) nach einem der vorhergehenden Ansprüche,
**dadurch gekennzeichnet, dass**
die zweite Stirnradgetriebestufe (90) im Wesentlichen in der Längsmittelebene (66) angeordnet ist.

5. Elektrische Achsantriebsvorrichtung (10) nach einem der vorhergehenden Ansprüche,
**dadurch gekennzeichnet, dass**
die elektrische Maschine (34) zumindest zu zwei Dritteln ihres Volumens auf der ersten Seite (68) angeordnet ist.

6. Elektrische Achsantriebsvorrichtung (10) nach einem der vorhergehenden Ansprüche,
**dadurch gekennzeichnet, dass**
eine zweite elektrische Maschine (110) und ein weiteres, von der zweiten elektrischen Maschine (110) antreibbares und mit dem zweiten Stirnrad (62) kämmendes Stirnrad (112) vorgesehen sind.

7. Elektrische Achsantriebsvorrichtung (10) nach Anspruch 6,
**dadurch gekennzeichnet, dass**
die zweite elektrische Maschine (110) hinsichtlich einer durch die Fahrzeugquerrichtung (28) und die Fahrzeuglängsrichtung (30) aufgespannten weiteren Ebene des Kraftfahrzeugs auf einer dritten Seite der weiteren Ebene angeordnet ist, wobei die erste elektrische Maschine (34) auf einer der dritten Seite in Fahrzeughochrichtung gegenüberliegenden vierten Seite der weiteren Ebene angeordnet ist.

8. Elektrische Achsantriebsvorrichtung (10) nach Anspruch 6 oder 7,
**dadurch gekennzeichnet, dass**
die zweite elektrische Maschine (110) entlang einer senkrecht zur Fahrzeugquerrichtung (28) verlaufenden Richtung mit der ersten elektrischen Maschine (34) fluchtet.

9. Elektrische Achsantriebsvorrichtung (10) nach einem der vorhergehenden Ansprüche,
**dadurch gekennzeichnet, dass**
die erste Planetengetriebestufe (46), die erste elektrische Maschine (34) und die erste Stirnradgetriebestufe (48) in einem gemeinsamen Gehäuse (58) angeordnet sind, wobei das Gehäuse (58) zu jeweils gleichen Teilen auf der ersten Seite (68) und auf der zweiten Seite (70) angeordnet ist.

10. Elektrische Achsantriebsvorrichtung (10) nach einem der vorhergehenden Ansprüche,
**dadurch gekennzeichnet, dass**
ein Ölkühler und eine Leistungselektronik auf einer dem Achsgetriebe (64) abgewandten Seite der ersten elektrischen Maschine (34) angeordnet sind.

11. Elektrische Achsantriebsvorrichtung (10) nach einem der vorhergehenden Ansprüche,
**gekennzeichnet durch**
ein zweites Antriebsrad (18) und eine Starrachsvorrichtung, mittels welcher das Antriebsrad (14) und das zweite Antriebsrad (18) miteinander verbunden sind, wobei ein Teilgehäuse zu einer Aufnahme des Getriebes (44) vorgesehen ist, wobei das Teilgehäuse einen Flansch aufweist, welcher mit einem zweiten Flansch des Achsgetriebes (64) verbunden oder verbindbar ist.

12. Nutzfahrzeug (12), mit einer elektrischen Achsantriebsvorrichtung (10) nach
einem der vorhergehenden Ansprüche,
**gekennzeichnet durch**
zwei Längsträger (24, 26), wobei die genau zwei Planetengetriebestufen (46, 72), die genau zwei Stirnradstufen (48, 90), die erste und die zweite elektrische Maschine (34, 110) allesamt in Fahrzeugquerrichtung (28) zwischen den Längsträgern (24, 26) angeordnet sind,
wobei die erste und die zweite elektrische Maschine (34, 110) die einzigen Antriebsmaschinen der Achsantriebsvorrichtung (10) sind.

13. Elektrische Achsantriebsvorrichtung (10) für ein Kraftfahrzeug (12), mit wenigstens einer ersten elektrischen Maschine (34), welche einen Stator (36) und einen Rotor (38) aufweist, der um eine Maschinendrehachse (42) relativ zu dem Stator (36) drehbar ist, mit einem von der ersten elektrischen Maschine (34) antreibbaren Getriebe (44), welches
- genau zwei Planetengetriebestufen (46, 72), nämlich eine von der ersten elektrischen Maschine (34) antreibbare erste Planetengetriebestufe (46) und eine von der elektrischen Maschine (34) antreibbare zweite Planetengetriebestufe (72),
- und genau zwei Stirnradgetriebestufen (48, 90), nämlich eine von der ersten elektrischen Maschine (34) antreibbare erste Stirnradgetriebestufe (48), die ein erstes Stirnrad (60) und ein mit dem ersten Stirnrad (60) kämmendes zweites Stirnrad (62) aufweist, und eine zweite Stirnradgetriebestufe (90)
aufweist,
und mit wenigstens einem um eine parallel zur Maschinendrehachse (42) verlaufende Raddrehachse (20) drehbaren und über das Getriebe (44) von der ersten elektrischen Maschine (34) antreibbaren Antriebsrad (14) des Kraftfahrzeugs (12),
wobei ein über das Getriebe (44) von der ersten elektrischen Maschine (34) antreibbares Achsgetriebe (64) vorgesehen ist, über welches das Antriebsrad (14) von der ersten elektrischen Maschine (34) antreibbar ist;
wobei
- die erste elektrische Maschine (34) hinsichtlich einer durch die Fahrzeughochrichtung (32) und die Fahrzeuglängsrichtung (30) aufgespannten Längsmittelebene (66) des Kraftfahrzeugs (12) zumindest teilweise auf einer ersten Seite (68) der Längsmittelebene (66) angeordnet ist; und
- die erste Stirnradgetriebestufe (48) auf einer der ersten Seite (68) in Fahrzeugquerrichtung (28) gegenüberliegenden zweiten Seite (70) der Längsmittelebene (66) angeordnet ist
**dadurch gekennzeichnet, dass**
- bezogen auf einen Drehmomentenfluss von der ersten elektrischen Maschine (34) zu dem Antriebsrad (14), die erste Planetengetriebestufe (46) nach der ersten elektrischen Maschine (34) und vor dem Antriebsrad (14), die erste Stirnradgetriebestufe (48) nach der ersten Planetengetriebestufe (46) und vor dem Antriebsrad (14), die zweite Planetengetriebestufe (72) nach der ersten Stirnradgetriebestufe (48) und vor dem Antriebsrad (14) und die zweite Stirnradgetriebestufe (90) nach der zweiten Planetengetriebestufe (72) und vor dem Antriebsrad (14) angeordnet ist,
- ein Bremselement (82) vorgesehen ist, mittels welchem ein Getriebeelement der zweiten Planetengetriebestufe (72) an einem Gehäuse (58) des Getriebes (44) festlegbar ist, wobei das Bremselement (82) ein in axialer Richtung der zweiten Planetengetriebestufe (72) relativ zu dem Gehäuse (58) verschiebbares Sonnenrad (74) der zweiten Planetengetriebestufe (72) aufweist.

## Claims

1. Electric drive device (10) for a motor vehicle (12), with at least one first electric machine (34) having a stator (36) and a rotor (38) rotatable about a machine axis of rotation (42) relative to the stator (36), with a gearbox (44), which can be driven by the first electric machine (34) and which
- has precisely two planetary stages (46, 72), i.e. a first planetary stage (46), which can be driven by the first electric machine (34), and a second planetary stage (72), which can be driven by the first electric machine (34),
- and precisely two spur gear stages (48, 90), i.e. a first spur gear stage (48), which can be driven by the first electric machine (34) and has a first spur gear (60) and a second spur gear (62) meshing with the first spur gear (60), and a second spur gear stage (90),
and with at least one drive gear (14) of the motor vehicle (12), which is rotatable about a wheel axis of rotation (20) extending parallel to the machine axis of rotation (42) and can be driven via the gearbox (44) by the first electric machine (34),
wherein an axle drive (64) is provided, which can be driven via the gearbox (44) by the first electric machine (34) and via which the drive gear (14) can be driven by the first electric machine (34), wherein
- the first electric machine (34) is at least partially located on a first side (68) of the longitudinal central plane (66) with regard to a longitudinal central plane (66) defined by the vertical direction (32) of the vehicle and the longitudinal direction (30) of the vehicle, and
- the first spur gear stage (48) is located on a second side (70) of the longitudinal central plane (66) opposite the first side (68) in the transverse direction (28) of the vehicle,
**characterised in that**
- with regard to a torque flow from the first electric machine (34) to the drive gear (14), the first planetary stage (46) is located downstream of the first electric machine (34) and upstream of the drive gear (14), the first spur gear stage (48) is located downstream of the first planetary stage (46) and upstream of the drive gear (14), the second planetary stage (72) is located downstream of the first spur gear stage (48) and upstream of the drive gear (14), and the second spur gear stage (90) is located downstream of the second planetary stage (72) and upstream of the drive gear (14),
- a braking element (82) is provided, by means of which a gearbox element of the first planetary stage (46) or a gearbox element of the second planetary stage (72) can be immobilised at a housing (58) of the gearbox (44), wherein the braking element (82) has a ring gear (76) displaceable in the axial direction of the respective planetary stage (72) relative to the housing (58).

2. Electric drive device (10) according to claim 1,
**characterised in that**
at least one blocking element (82) is provided, by means of which at least two gearbox elements of the planetary stage (72) can be blocked to each other.

3. Electric drive device (10) according to claim 1 or 2,
**characterised in that**
the planetary stage (72) is mainly located on the second side (70).

4. Electric drive device (10) according to any of the preceding claims,
**characterised in that**
the second spur gear stage (90) is substantially located in the longitudinal central plane (66).

5. Electric drive device (10) according to any of the preceding claims,
**characterised in that**
at least two thirds of the volume of the electric machine (34) are located on the first side (68).

6. Electric drive device (10) according to any of the preceding claims,
**characterised in that**
a second electric machine (110) and a further spur gear (112), which can be driven by the second electric machine (110) and meshes with the second spur gear (62), are provided.

7. Electric drive device (10) according to claim 6,
**characterised in that**
the second electric machine (110) is located on a third side of the further plane with regard to a further plane defined by the transverse direction (28) of the vehicle and the longitudinal direction (30) of the vehicle, wherein the first electric machine (34) is located on a fourth side of the further plane opposite the third side in the vertical direction of the vehicle.

8. Electric drive device (10) according to claim 6 or 7,
**characterised in that**
the second electric machine (110) is in alignment with the first electric machine (34) in a direction perpendicular to the transverse direction (28) of the vehicle.

9. Electric drive device (10) according to any of the preceding claims,
**characterised in that**
the first planetary stage (46), the first electric machine (34) and the first spur gear stage (48) are located in a common housing (58), wherein equal parts of the housing (58) are located on the first side (68) and on the second side (70).

10. Electric drive device (10) according to any of the preceding claims,
**characterised in that**
an oil cooler and a power electronics device are located on a side of the first electric machine (34) that is averted from the axle drive (64).

11. Electric drive device (10) according to any of the preceding claims,
**characterised by**
a second drive gear (18) and a rigid axle device by means of which the drive gear (14) and the second drive gear (18) are connected to each other, wherein a sub-housing is provided for an accommodation of the gearbox (44), the sub-housing having a flange connected or connectable to a second flange of the axle drive (64).

12. Commercial vehicle (12) with an electric drive device (10) according to any of the preceding claims,
**characterised by**
two side members (24, 26), wherein the precisely two planetary stages (46, 72), the precisely two spur gear stages (48, 90), the first and the second electric machine (34, 110) are altogether located between the side members (24, 26) in the transverse direction (28) of the vehicle,
wherein the first and the second electric machine (34, 110) are the only drive machines of the axle drive device (10).

13. Electric drive device (10) for a motor vehicle (12), with at least one first electric machine (34) having a stator (36) and a rotor (38) rotatable about a machine axis of rotation (42) relative to the stator (36), with a gearbox (44), which can be driven by the first electric machine (34), which
- has precisely two planetary stages (46, 72), i.e. a first planetary stage (46), which can be driven by the first electric machine (34), and a second planetary stage (72), which can be driven by the first electric machine (34),
- and precisely two spur gear stages (48, 90), i.e. a first spur gear stage (48), which can be driven by the first electric machine (34) and has a first spur gear (60) and a second spur gear (62) meshing with the first spur gear (60), and a second spur gear stage (90),
and with at least one drive gear (14) of the motor vehicle (12), which is rotatable about a wheel axis of rotation (20) extending parallel to the machine axis of rotation (42) and can be driven via the gearbox (44) by the first electric machine (34),
wherein an axle drive (64) is provided, which can be driven via the gearbox (44) by the first electric machine (34) and via which the drive gear (14) can be driven by the first electric machine (34), wherein
- the first electric machine (34) is at least partially located on a first side (68) of the longitudinal central plane (66) with regard to a longitudinal central plane (66) defined by the vertical direction (32) of the vehicle and the horizontal direction (30) of the vehicle, and
- the first spur gear stage (48) is located on a second side (70) of the longitudinal central plane (66) opposite the first side (68) in the transverse direction (28) of the vehicle,
**characterised in that**
- with regard to a torque flow from the first electric machine (34) to the drive gear (14), the first planetary stage (46) is located downstream of the first electric machine (34) and upstream of the drive gear (14), the first spur gear stage (48) is located downstream of the first planetary stage (46) and upstream of the drive gear (14), the second planetary stage (72) is located downstream of the first spur gear stage (48) and upstream of the drive gear (14), and the second spur gear stage (90) is located downstream of the second planetary stage (72) and upstream of the drive gear (14),
- a braking element (82) is provided, by means of which a gearbox element of the second planetary stage (72) can be immobilised at a housing (58) of the gearbox (44), wherein the braking element (82) has a spur gear (74) of the second planetary stage (72), which is displaceable in the axial direction of the second planetary stage (72) relative to the housing (58).

## Revendications

1. Pont moteur électrique (10) pour un véhicule à moteur (12), comprenant au moins un premier moteur électrique (34), qui comporte un stator (36) et un rotor (38) qui peut tourner autour d'un axe de rotation de moteur (42) par rapport au stator (36), une transmission menée par le premier moteur électrique (34), qui
- comporte exactement deux étages de satellites (46, 72), notamment un premier étage de satellites (46) mené par le premier moteur électrique (34) et un second étage de satellites (72) menée par le moteur électrique (34),
- et exactement deux étages d'engrenages cylindriques (48, 90), notamment un premier étage d'engrenages cylindriques (48) mené par le premier moteur (34), qui comporte un première roue cylindrique (60) et une seconde roue cylindrique (62) s'engrenant avec la première roue cylindrique (60), et un second étages d'engrenages cylindriques (90),
et au moins une roue motrice (14) du véhicule à moteur (12) pouvant tourner autour d'un axe de rotation de roue parallèle à l'axe de rotation moteur (42) et pouvant être entraînée par la transmission (44) du premier moteur électrique (34),
une transmission finale (64) pouvant être entraînée par l'intermédiaire de la transmission (4) par le premier moteur (34), laquelle peut être entraînée la roue motrice (14) par le premier moteur électrique (34) ;
- le premier moteur électrique (34), par rapport à un plan médian longitudinal s'étendant à la verticale du véhicule (32) et au sens de la longueur du véhicule (30), étant disposé au moins en partie sur un premier côté (68) du plan médian longitudinal (66) ;
- le premier étage d'engrenages cylindriques (48) étant disposé sur un second côté (70) du plan médian longitudinal (66) en regard du premier côté (68) dans le sens transversal du véhicule (28)
**caractérisé en ce que**
- par rapport à un flux de couple du premier moteur électrique (34) par rapport à la roue motrice (14), le premier étage de satellites (46) est disposé après le premier moteur électrique (34) et avant la roue motrice (14), le premier étage d'engrenages cylindriques (48) après le premier étage de satellites (46) et avant la roue motrice (14), le second étage de satellite (72) après le premier étage d'engrenages cylindriques (48) et avant la roue motrice (14) et le second étage d'engrenages cylindriques (90) après le second étage de satellites (72) et avant la roue motrice (14),
- un élément de frein (82) permettant de fixer un élément de transmission du premier étage de satellites (46) ou un élément de transmission du second étage de satellites (72) sur un carter (58) de la transmission (44), l'élément de frein (82) présentant une couronne (76) pouvant se déplacer dans le sens axial de chaque étage de satellites (72) par rapport au carter (58).

2. Pont moteur électrique (10) selon la revendication 1, **caractérisé en ce qu'**au moins un élément de blocage (82) permet de bloquer au moins deux éléments de transmission du second étage de satellites (72).

3. Pont moteur électrique (10) selon la revendication 1 ou la revendication 2, **caractérisé en ce que** le second étage de satellites (72) est disposé principalement sur le second côté (70).

4. Pont moteur électrique (10) selon l'une quelconque des revendications précédentes, **caractérisé en ce que** le second étage d'engrenages cylindriques (90) est disposé essentiellement dans le plan médian longitudinal (66).

5. Pont moteur électrique (10) selon l'une quelconque des revendications précédentes, **caractérisé en ce que** le moteur électrique (34) est disposé au moins pour deux tiers de son volume sur le premier côté (68).

6. Pont moteur électrique (10) selon l'une quelconque des revendications précédentes, **caractérisé en ce qu'**il est prévu un second moteur électrique (110) et une autre roue cylindrique (112) engrenée par la seconde roue cylindrique (62) et pouvant être entrainée par le second moteur électrique (110).

7. Pont moteur électrique (10) selon la revendication 6, **caractérisé en ce que** le second moteur électrique (110) est disposé, par rapport à un autre plan s'étendant dans le sens transversal du véhicule (28) et dans le sens longitudinal du véhicule (30) sur un troisième côté de l'autre plan, le premier moteur (34) étant disposé sur un quatrième côté de l'autre plan en regard du troisième côté dans le sens de la hauteur du véhicule.

8. Pont moteur électrique (10) selon la revendication 6 ou la revendication 7, **caractérisé en ce que** le second moteur électrique (110) vient à fleur le long d'une direction s'étendant perpendiculaire au sens transversal du véhicule (28) avec le premier moteur électrique (34).

9. Pont moteur électrique (10) selon l'une quelconque des revendications précédentes, **caractérisé en ce que** le premier étage de satellites (46), le premier moteur électrique (34) et le premier étage d'engrenages cylindriques (48) sont disposés dans un carter commun (58), le carter (58) étant disposé dans les mêmes proportions sur le premier côté (68) et sur le deuxième côté (70).

10. Pont moteur électrique (10) selon l'une quelconque des revendications précédentes, **caractérisé en ce qu'**un refroidisseur d'huile et une électronique de puissance sont disposés sur un côté du premier moteur électrique (34) opposé à la transmission finale (64).

11. Pont moteur électrique (10) selon l'une quelconque des revendications précédentes **caractérisé en ce qu'**une seconde roue motrice (18) et un essieu rigide qui permet d'accoupler ensemble la roue motrice (14) et la seconde roue motrice (18), un carter secondaire servant à loger la transmission (44) le carter secondaire présentant une bride qui peut être reliée ou est reliée à une seconde bride de la transmission finale (64).

12. Véhicule utilitaire (12) comprenant un pont moteur électrique (10) selon l'une quelconque des revendications précédentes, **caractérisé par** deux longerons (24, 26), les deux étages de satellites (46, 72), les deux étages d'engrenages cylindriques (48, 90), le premier et le second moteur électrique (34, 110) sont tous disposés dans le sens transversal du véhicule (28) entre les longerons (24, 26),
le premier et le second moteur électrique (34, 110) étant les seules moteurs d'entraînement du pont moteur (10).

13. Pont moteur électrique (10) pour un véhicule à moteur (12), comprenant au moins un premier moteur électrique (34) qui comporte un stator (36) et un rotor (38) qui peut tourner autour d'un axe de rotation de moteur (42) par rapport au stator (36), une transmission menée par le premier moteur électrique (34), qui
- comporte exactement deux étages de satellites (46, 72), notamment un premier étage de satellites (46) mené par le premier moteur électrique (34) et un second étage de satellites (72) menée par le moteur électrique (34),
- et exactement deux étages d'engrenages cylindriques (48, 90), notamment un premier étage d'engrenages cylindriques (48) mené par le premier moteur (34), qui comporte un première roue cylindrique (60) et une seconde roue cylindrique (62) s'engrenant avec la première roue cylindrique (60), et un second étages d'engrenages cylindriques (90),
et au moins une roue motrice (14) du véhicule à moteur (12) pouvant tourner autour d'un axe de rotation de roue parallèle à l'axe de rotation moteur (42) et pouvant être entraînée par la transmission (44) du premier moteur électrique (34),
une transmission finale (64) pouvant être entraînée par l'intermédiaire de la transmission (44) par le premier moteur (34), laquelle peut être entraînée la roue motrice (14) par le premier moteur électrique (34) ;
- le premier moteur électrique (34), par rapport à un plan médian longitudinal (66) du véhicule à moteur (12) s'étendant à la verticale du véhicule (32) et au sens de la longueur du véhicule (30), étant disposé au moins en partie sur un premier côté (68) du plan médian longitudinal (66) ;
- le premier étage d'engrenages cylindriques (48) étant disposé sur un second côté (70) du plan médian longitudinal (66) en regard du premier côté (68) dans le sens transversal du véhicule (28)
**caractérisé en ce que**
- par rapport à un flux de couple du premier moteur électrique (34) par rapport à la roue motrice (14), le premier étage de satellites (46) est disposé après le premier moteur électrique (34) et avant la roue motrice (14), le premier étage d'engrenages cylindriques (48) après le premier étage de satellites (46) et avant la roue motrice (14), le second étage de satellite (72) après le premier étage d'engrenages cylindriques (48) et avant la roue motrice (14) et le second étage d'engrenages cylindriques (90) après le second étage de satellites (72) et avant la roue motrice (14),
- un élément de frein (82) permettant de fixer un élément de transmission du premier étage de satellites (46) ou un élément de transmission du second étage de satellites (72) sur un carter (58) de la transmission (44), l'élément de frein (82) présentant une couronne (74) du second étage de satellites (72) pouvant se déplacer dans le sens axial de chaque étage de satellites (72) par rapport au carter (58).
